# EUROPEAN PATENT APPLICATION

(11) **EP 3 855 770 A1**
(43) Date of publication of application: **28.07.2021**
(21) Application number: 20215715.2
(22) Date of filing: 05.07.2016
(51) Int. Cl.: H04W 4/06

(54) **SERVICE PROCESSING METHOD, DEVICE, AND SYSTEM**

(62) Divisional of application: 16907784.9
(71) Applicant: Huawei Technologies Co., Ltd., Shenzhen, Guangdong 518129 (CN)
(72) Inventor: LU, Wei, Shenzhen, Guangdong 518129, P.R. (CN); LI, Zhiming, Shenzhen, Guangdong 518129, P.R. (CN)
(74) Representative: Gill Jennings & Every LLP

(57) **Abstract**

A service processing method, comprising:
receiving (505), by a broadcast multimedia service center, a service request message from a service capability exposure function, wherein the service request message carries identification information and service requirement information of a terminal device; and
determining (506), by the broadcast multimedia service center, a service data transmission mode based on the service request message, wherein the transmission mode is unicast transmission or multicast transmission; and
sending, by the broadcast multimedia service center, a service request response message to the service capability exposure function.

## Description

### TECHNICAL FIELD

This application relates to the communications field, and more specifically, to a service processing method, a device, and a system.

### BACKGROUND

Multimedia Broadcast Multicast Service (Multimedia Broadcast Multicast Service, MBMS) is a point-to-multipoint service in which information is sent by one data source to a plurality of users. Users having a same service requirement are provided with services simultaneously, so as to share a network resource. Therefore, the MBMS is an efficient information allocation solution that effectively saves increasingly insufficient radio resources. Subscription of a multicast service is implemented through signaling interaction between a user and a network. To be specific, a connection is established between the user and the network, to instruct a network side to receive broadcast content, so that the user joins a group.

In a prior-art group communication service (Group Communication Service, GCS) system, a third-party application server is connected to a broadcast multimedia service center (Broadcast Multicast service center, BMSC) of an operator network by using an MB2 interface, and learns of a network transmission capability of the operator network. The third-party application server determines, based only on a network transmission capability of the BMSC of the operator network, to use a unicast transmission mode or a multicast transmission mode for service data. In this case, network resources cannot be fully utilized, causing a waste of network resources.

### SUMMARY

Embodiments of this application provide a service processing method, a device, and a system, so as to improve network resource utilization.

According to a first aspect, a service processing method is provided. The method includes:
receiving, by a broadcast multimedia service center BMSC, a service request message sent by a service capability exposure function SCEF, where the service request message carries identification information and service requirement information of a terminal device; and
determining, by the BMSC, a service data transmission mode based on the service request message, where the transmission mode is unicast transmission or multicast transmission.

The BMSC receives the service request message sent by the service capability exposure function SCEF, and determines, based on the identification information and the service requirement information of the terminal device carried in the service request message, the service data transmission mode to be unicast transmission or multicast transmission, so that the BMSC can determine the transmission mode based on a service request, so as to properly configure a network resource and improve network resource utilization.

In some possible implementations, the determining, by the BMSC, a service data transmission mode based on the service request message includes:
determining, by the BMSC, the transmission mode based on the service requirement information and configuration information on the BMSC.

The BMSC may configure transmission policy information, such as SCS/AS subscription information. The subscription information may be a transmission mode of SCS/AS service data. In this case, after receiving the service request message, the BMSC can determine a transmission mode of a data stream based on the service requirement information, so as to properly configure the network resource and improve the network resource utilization.

In some possible implementations, the method further includes:
obtaining, by the BMSC, location information of the terminal device; and
the determining, by the BMSC, a service data transmission mode based on the service request message includes:
determining, by the BMSC, the transmission mode based on a correspondence between a service area and a cell identity, the identification information of the terminal device, the service requirement information, and the location information of the terminal device.

The BMSC obtains the location information of the terminal device, and may determine the transmission mode based on the location information of the terminal device, the correspondence between the service area and the cell identity, and information in the service request message. In this way, the BMSC can consider a quantity of terminal devices that are within a server area and that have service requirements, so as to avoid a problem that a server performs multicasting within a relatively large service area but only a small quantity of users receive service data. This further improves the network resource utilization.

In some possible implementations, the service request message further carries the location information of the terminal device; and
the obtaining, by the BMSC, location information of the terminal device includes:
obtaining, by the BMSC, the location information of the terminal device from the service request message.

The BMSC receives the service request message sent by the SCEF. If the service request message carries the location information of the terminal device, the BMSC may obtain the location information of the terminal device from the service request message, and may determine the transmission mode with reference to the correspondence between the service area and the cell identity, and information in the service request message. In this way, the BMSC can consider a quantity of terminal devices that are within a server area and that have service requirements, so as to avoid the problem that a server performs multicasting within a relatively large service area but only a small quantity of users receive service data. This further improves the network resource utilization.

In some possible implementations, the determining, by the BMSC, the transmission mode based on a correspondence between a service area and a cell identity, the identification information of the terminal device, the service requirement information, and the location information of the terminal device includes:
determining, by the BMSC, a quantity of terminal devices based on the identification information of the terminal device; and
determining, by the BMSC, the transmission mode based on the quantity of terminal devices, the service requirement information, the location information of the terminal device, and the correspondence.

The BMSC receives the service request message, first determines the quantity of terminal devices based on the identification information of the terminal device, and then determines the service data transmission mode based on the quantity of terminal devices, the service requirement information, the location information of the terminal device, and the correspondence between the service area and the cell identity, so as to properly configure the network resource and improve the network resource utilization.

In some possible implementations, the service request message includes transmission mode notification information, and the transmission mode notification information is used to notify the BMSC of the service data transmission mode.

The BMSC performs an operation based on the transmission mode in the received data transmission mode notification information. For example, if the server instructs to use a multicast mode, the BMSC initiates a multicast session process. Alternatively, the BMSC re-determines, based on the received service requirement information and the identification information of the terminal device, to use a multicast mode or a unicast mode, so that the service data transmission mode can be determined based on a requirement of the terminal device. In this way, the network resource utilization can be further improved.

In some possible implementations, the service request message is sent by the SCEF to one or more BMSCs, where the one or more BMSCs are BMSCs that are determined by the SCEF based on the obtained location information of the terminal device and to which the terminal device belongs.

The SCEF determines, based on the location information of the terminal device, the one or more BMSCs to which the terminal device belongs, and sends the service request message to the one or more BMSCs. In this case, the SCEF sends the service request message to the determined one or more BMSCs, thereby improving service quality of serving the UE.

In some possible implementations, the method further includes:
sending, by the BMSC, a service request response message to the SCEF, where the service request response message is used to establish a user-plane transmission path, and the service request response message includes an IP address and port number information that correspond to the BMSC.

After determining the service data transmission mode, the BMSC sends the service request response message to the server by using the SCEF, where the service request response message includes the user-plane IP address and port number information. After the server receives the service request response message, the server establishes a connection to the one or more BMSCs to which the terminal device belongs, so that the server can send data by using the user-plane transmission path. In this case, an operator can control a transmission pipe, so as to bring profits to the operator.

In some possible implementations, when the BMSC determines the service data transmission mode to be multicast transmission, the method further includes:
generating, by the BMSC, a temporary mobile group identity TMGI, where the TMGI is used to identify a service data transmission path; and
sending, by the BMSC, the TMGI to the terminal device.

When the BMSC determines the service data transmission mode to be multicast transmission, the BMSC generates the TMGI, where the TMGI is used to identify the service data transmission path. The BMSC sends the TMGI to the UE that belongs to the BMSC, so that the UE receives required service data on the transmission path identified by the TMGI.

In some possible implementations, the sending, by the BMSC, the TMGI to the terminal device includes:
sending, by the BMSC, the TMGI to the terminal device by using the SCEF and the server.

The BMSC may directly send the TMGI to the UE that belongs to the BMSC, so that the UE receives the required service data on the transmission path identified by the TMGI. Alternatively, the BMSC may send the TMGI to the UE through forwarding by the SCEF and the SCS/AS.

In some possible implementations, the service request message includes time information of receiving the service data by the terminal device.

The time information of receiving the service data by the terminal device may be that the UE receives the service data at a particular time point, or during a time period in which the service data can be received, or immediately, or the like, so that the transmission mode determined by the BMSC is more accurate. This improves resource utilization.

In some possible implementations, the service data is video data.

The service data may alternatively be a service such as audio or an image. This is not limited in the present invention.

According to a second aspect, a service processing method is provided. The method includes:
receiving, by a service capability exposure function SCEF, a first service request message sent by a server, where the first service request message carries identification information and service requirement information of a terminal device;
obtaining, by the SCEF, location information of the terminal device based on the identification information of the terminal device;
determining, by the SCEF, one or more broadcast multimedia service centers BMSCs based on the location information of the terminal device; and
sending, by the SCEF, a second service request message to the one or more BMSCs, where the second service request message carries the identification information and the service requirement information of the terminal device.

The SCEF receives the first service request message, where the first service request message carries the identification information and the service requirement information of the terminal device. The SCEF obtains the location information of the terminal device based on the identification information of the terminal device in the first service request message; determines, based on the location information of the terminal device, the one or more BMSCs to which the terminal device belongs; and sends the second service request message to the one or more BMSCs, so that the BMSC can determine the transmission mode based on a service request of the server, so as to properly configure a network resource and improve network resource utilization.

In some possible implementations, the method further includes:
determining, by the SCEF, a service data transmission mode, where
the second service request message further carries the transmission mode, and the transmission mode is unicast transmission or multicast transmission.

The SCEF determines the service data transmission mode, and notifies the BMSC by sending the service request message including the transmission mode, so that the BMSC can implement the determined transmission mode, so as to properly configure the network resource and improve the network resource utilization.

In some possible implementations, the determining, by the SCEF, a service data transmission mode includes:
determining, by the SCEF, the transmission mode based on the service requirement information and configuration policy information.

The SCEF determines the service data transmission mode, and the configuration policy information may be determined according to a protocol between the SCEF and an operator. The SCEF notifies the BMSC by sending the transmission mode, so that the BMSC can determine the transmission mode based on the service request of the server, so as to properly configure the network resource and improve the network resource utilization.

In some possible implementations, the determining, by the SCEF, a service data transmission mode includes:
obtaining, by the SCEF, a correspondence between a service area and a cell identity of the BMSC; and
determining, by the SCEF, the transmission mode based on the identification information of the terminal device, the service requirement information, the location information of the terminal device, and the correspondence.

The SCEF may determine the transmission mode based on the correspondence between the service area and the cell identity of the BMSC, and notify the BMSC by sending the transmission mode, so that the BMSC can determine the transmission mode based on the service request of the server, so as to properly configure the network resource and improve the network resource utilization.

In some possible implementations, the obtaining, by the SCEF, a correspondence between a service area and a cell identity of the BMSC includes:
obtaining, by the SCEF, the correspondence configured by the SCEF; or
obtaining, by the SCEF, the correspondence from the BMSC.

The correspondence between the service area and the cell identity may be configured according to the protocol between the SCEF and the operator, or may be obtained from the BMSC. The SCEF determines the transmission mode based on the correspondence, and notifies the BMSC by sending the transmission mode, so that the BMSC can determine the transmission mode based on the service request of the server, so as to properly configure the network resource and improve the network resource utilization.

In some possible implementations, the determining, by the SCEF, the transmission mode based on the identification information of the terminal device, the service requirement information, the location information of the terminal device, and the correspondence includes:
determining, by the SCEF, a quantity of terminal devices based on the identification information of the terminal device; and
determining, by the SCEF, the transmission mode based on the quantity of terminal devices, the service requirement information, the location information of the terminal device, and the correspondence.

The SCEF first determines the quantity of terminal devices based on the identification information of the terminal device, then determines the service data transmission mode based on the quantity of terminal devices, the service requirement information, the location information of the terminal device, and the correspondence between the service area and the cell identity, and sends the transmission mode to the BMSC, so that the BMSC can determine the transmission mode based on the service request of the server, so as to properly configure the network resource and improve the network resource utilization.

In some possible implementations, the obtaining, by the SCEF, location information of the terminal device based on the identification information of the terminal device includes:
sending, by the SCEF, paging indication information to a mobility management entity MME; and
receiving, by the SCEF, the location information of the terminal device that is obtained by the MME by paging the terminal device that is in an idle state.

The SCEF sends the paging indication information to the mobility management entity MME, where the paging indication information is used to instruct the MME to send a paging message to a terminal device that is in an idle state in the terminal device. In this case, the MME can switch a state of the terminal device from the idle state to a connected state, so that the SCEF can obtain the location information of the terminal device from the MME.

In some possible implementations, the first service request message includes time information of receiving service data by the terminal device.

The time information of receiving the service data by the terminal device may be that the UE receives the service data at a particular time point, or during a time period in which the service data can be received, or immediately, or the like. This is not limited in the present invention.

In some possible implementations, the first service request message is used as the second service request message.

The first service request message may be used as the second service request message, and the SCEF may send, to the BMSC, the first service request message including the service requirement information and an identity of the terminal device, or the first service request message including the time information, or the first service request message including the service requirement information, an identity of the terminal device, and the time information, so that the BMSC may perform determining based on a requirement of the terminal device, so as to improve the network resource utilization.

In some possible implementations, the second service request message further includes the time information of receiving the service data by the terminal device.

The time information of receiving the service data by the terminal device may be that the UE receives the service data at a particular time point, or during a time period in which the service data can be received, or immediately, or the like, so that the transmission mode determined by the BMSC is more accurate. This improves resource utilization.

In some possible implementations, the method further includes:
receiving, by the SCEF, one or more service request response messages sent by the one or more BMSCs, where the service request response message includes an IP address and port number information that correspond to the one or more BMSCs; and
sending, by the SCEF, the one or more service request response messages to the server.

The SCEF receives the one or more service request response messages sent by the one or more BMSCs, where the service request response message includes the IP address information and the port number information that correspond to the BMSC. The SCEF sends the service request response message to the server, and after the server receives the service request response message, the server establishes a connection to the one or more BMSCs to which the terminal device belongs, so that the server can send data by using a user-plane transmission path.

In some possible implementations, the method further includes:
receiving, by the SCEF, a plurality of service request response messages sent by the plurality of BMSCs, where the service request response message is used by the server to establish a user-plane transmission path to the BMSC;
sending, by the SCEF to the server, a first service request response message in the plurality of service request response messages; and
sending, by the SCEF, a second service request response message set to a first BMSC corresponding to the first service request response message, where the second service request response message set is all service request response messages different from the first service request response message in the plurality of service request response messages.

The server may directly send the service data to a master BMSC, and send the service data to a slave BMSC through forwarding by the master BMSC. This can reduce a requirement on the server.

In some possible implementations, the method further includes:
receiving, by the SCEF, a temporary mobile group identity TMGI, where the TMGI is used to identify a service data transmission path; and
sending, by the SCEF, the TMGI to the terminal device by using the server.

When the BMSC determines the service data transmission mode to be multicast transmission, the BMSC generates the TMGI, where the TMGI is used to identify the service data transmission path. The BMSC sends the TMGI to the UE that belongs to the BMSC, so that the UE receives the required service data on the transmission path identified by the TMGI.

In some possible implementations, the service data is video data.

According to a third aspect, this application provides a service processing method. The method includes: determining, by a server, a first service request message, where the first service request message includes identification information of a terminal device and/or service requirement information of the terminal device; and sending, by the server, the first service request message to a service capability exposure function SCEF, so that the SCEF obtains location information of the terminal device based on the identification information of the terminal device in the first service request message, determines one or more broadcast multimedia service centers BMSCs based on the location information of the terminal device, and sends a second service request message to the one or more BMSCs, where the second service request message is used by the BMSC to determine a service data transmission mode, and the transmission mode is unicast transmission or multicast transmission.

The server determines the first service request message, and sends the first service request message to the SCEF. The SCEF obtains the location information of the terminal device based on the identification information of the terminal device in the first service request message, determines the one or more broadcast multimedia service centers BMSCs based on the location information of the terminal device, and sends the second service request message to the one or more BMSCs, so that the BMSC determines, based on the second service request message, the service data transmission mode to be unicast transmission or multicast transmission. In this case, the BMSC can determine the transmission mode based on a service request of the server, so as to properly configure a network resource and improve network resource utilization.

In some possible implementations, the method further includes: determining, by the server, a service data transmission mode, and the sending, by the server, the first service request message to a service capability exposure function SCEF includes: sending, by the server, the first service request message to the SCEF, where the first service request message further includes a transmission mode notification message, and the transmission mode notification message is used to notify the BMSC of the service data transmission mode.

The server may determine the service data transmission mode according to a protocol between the server and an operator, and sends the service data transmission mode to the SCEF, to trigger the sending, by the SCEF, the second service request message to the BMSC, so as to establish a user-plane transmission path to the BMSC.

In some possible implementations, the method further includes: obtaining, by the server, a network transmission capability by using the SCEF, and the determining, by the server, a service data transmission mode includes: determining, by the server, the transmission mode based on the network transmission capability.

The server may obtain the network transmission capability of an operator network by using the SCEF, where the network transmission capability refers to a data transmission mode, multicast or unicast, that can be supported by the operator. The server determines the service data transmission mode based on the network transmission capability, and notifies the operator network by sending transmission mode notification information.

In some possible implementations, the method further includes: receiving, by the server, a service request response message; and establishing, by the server, a user-plane transmission path to the BMSC based on the service request response message.

After the server receives the service request response message, the server establishes a connection to the one or more BMSCs to which the terminal device belongs, so that the server can send data by using the user-plane transmission path.

In some possible implementations, the service request response message includes a user-plane IP address and user-plane port number information.

The server establishes the user-plane transmission path to the one or more BMSCs based on the user-plane IP address and port number information, so that the server can send data by using the user-plane transmission path.

In some possible implementations, the method further includes: receiving, by the server, a temporary mobile group identity TMGI sent by the SCEF, where the TMGI is used to identify a transmission path; and sending, by the server, the TMGI to the terminal device.

The server receives the TMGI that is generated when the BMSC determines the service data transmission mode to be multicast transmission, and the TMGI is used to identify the service data transmission path, so that the UE receives required service data on the transmission path identified by the TMGI.

In some possible implementations, the method further includes: obtaining, by the server, time information of receiving the service data by the terminal device; and the determining, by the server, a first service request message includes: determining, by the server, the first service request message, where the first service request message includes the time information.

The server obtains the time information, and the time information of receiving the service data by the terminal device may be that the UE receives the service data at a particular time point, or during a time period in which the service data can be received, or immediately, or the like. The server sends the time information to the terminal device, so that the transmission mode determined by the BMSC is more accurate, so as to improve resource utilization.

In some possible implementations, the service data is video data.

The service data may alternatively be a service such as audio or an image. This is not limited in the present invention.

According to a fourth aspect, this application provides a service processing method. The method includes: obtaining, by a server, a network transmission capability by using an SCEF; and determining, by the server, a service data transmission mode based on the network transmission capability, where the transmission mode is unicast transmission or multicast transmission.

The server obtains the network transmission capability by using the SCEF, and determines, based on the network transmission capability, the service data transmission mode to be unicast transmission or multicast transmission, so as to prevent service data transmission from relying on an MB2 interface, thereby reducing complexity of server deployment.

In some possible implementations, the method further includes: obtaining, by the server, identification information of a terminal device and/or service requirement information of the terminal device; and the determining, by the server, a service data transmission mode based on the network transmission capability includes: determining, by the server, the transmission mode based on the network transmission capability, the identification information of the terminal device, and/or the service requirement information of the terminal device.

The service requirement information may be a service content identifier, a session identifier, or the like. The server can determine the service data transmission mode based on a requirement of the terminal device, the identification information of the terminal device, and/or the network transmission capability. This further improves network resource utilization.

In some possible implementations, when the transmission mode is determined to be multicast transmission, the method further includes: obtaining, by the server, a TMGI, where the TMGI is used to identify a transmission path; and sending, by the server, the TMGI to the terminal device.

When determining the service data transmission mode to be multicast transmission, the server obtains the TMGI used to identify the transmission path, and sends the TMGI to the terminal device, so that the terminal device can receive service data on the transmission path identified by the TMGI.

According to a fifth aspect, this application provides a BMSC, where the BMSC includes modules for performing the method in the first aspect.

According to a sixth aspect, this application provides an SCEF, where the SCEF includes modules for performing the method in the second aspect.

According to a seventh aspect, this application provides a server, where the server includes modules for performing the method in the second aspect.

According to an eighth aspect, this application provides another server, where the server includes modules for performing the method in the fourth aspect.

According to a ninth aspect, a BMSC is provided. The BMSC includes a processor and a memory, where
the memory stores a program, and the processor executes the program, to perform the service processing method in any one of the first aspect or the possible implementations of the first aspect.

According to a tenth aspect, an SCEF is provided. The SCEF includes a processor and a memory, where
the memory stores a program, and the processor executes the program, to perform the service processing method in any one of the second aspect or the possible implementations of the second aspect.

According to an eleventh aspect, a server is provided. The server includes a processor and a memory; and
the memory stores a program, and the processor executes the program, to perform the service processing method in any one of the third aspect or the possible implementations of the third aspect.

According to a twelfth aspect, a server is provided. The server includes a processor and a memory; and the memory stores a program, and the processor executes the program, to perform the service processing method in any one of the fourth aspect or the possible implementations of the fourth aspect.

According to a thirteenth aspect, a system is provided. The system includes:
the BMSC in the fifth aspect, the SCEF in the sixth aspect, and the server in the seventh aspect.

According to a fourteenth aspect, a computer storage medium is provided. The computer storage medium stores program code, and the program code is used to instruct to perform the communication method in any one of the first aspect or the possible implementations of the first aspect.

According to a fifteenth aspect, a computer storage medium is provided. The computer storage medium stores program code, and the program code is used to instruct to perform the communication method in any one of the second aspect or the possible implementations of the second aspect.

According to a sixteenth aspect, a computer storage medium is provided. The computer storage medium stores program code, and the program code is used to instruct to perform the service processing method in any one of the third aspect or the possible implementations of the third aspect.

According to a seventeenth aspect, a computer storage medium is provided. The computer storage medium stores program code, and the program code is used to instruct to perform the service processing method in any one of the third aspect or the possible implementations of the third aspect.

Based on the foregoing technical solutions, the BMSC receives the service request message that carries the identification information and the service requirement information of the terminal device and that is sent by the service capability exposure function SCEF, and determines, based on the service request message, the service data transmission mode to be unicast transmission or multicast transmission, so that the BMSC can determine the transmission mode based on the service request, so as to properly configure the network resource and improve the network resource utilization.

### BRIEF DESCRIPTION OF DRAWINGS

To describe the technical solutions in the embodiments of this application more clearly, the following briefly describes the accompanying drawings required for describing the embodiments or the prior art. Apparently, the accompanying drawings in the following description show merely some embodiments of this application, and a person of ordinary skill in the art may derive other drawings from these accompanying drawings without creative efforts.
FIG. 1 is an architectural diagram of an MBMS system according to this application;
FIG. 2 is an architectural diagram of capability exposure in a 3GPP network according to this application;
FIG. 3 is an architectural diagram of service processing in the prior art;
FIG. 4 is a schematic interaction flowchart of service multicast service processing in the prior art;
FIG. 5 is a schematic interaction flowchart of a service processing method according to an embodiment of this application;
FIG. 6 is a schematic interaction flowchart of a service processing method according to another embodiment of this application;
FIG. 7 is a schematic interaction flowchart of a service processing method according to another embodiment of this application;
FIG. 8 is a schematic interaction flowchart of a service processing method according to another embodiment of this application;
FIG. 9 is a schematic diagram of a service processing method according to another embodiment of this application;
FIG. 10A and FIG. 10B are a schematic interaction flowchart of a service processing method according to another embodiment of this application;
FIG. 11 is a schematic diagram of a service processing method according to another embodiment of this application;
FIG. 12A and FIG. 12B are a schematic interaction flowchart of a service processing method according to another embodiment of this application;
FIG. 13A and FIG. 13B are a schematic interaction flowchart of a service processing method according to another embodiment of this application;
FIG. 14 is a schematic block diagram of a BMSC according to an embodiment of this application;
FIG. 15 is a schematic block diagram of an SCEF according to an embodiment of this application;
FIG. 16 is a schematic block diagram of a system according to an embodiment of this application;
FIG. 17 is a schematic structural block diagram of a BMSC according to an embodiment of this application; and
FIG. 18 is a schematic structural block diagram of an SCEF according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

It should be understood that, the technical solutions of the embodiments of the present invention may be applied to various communications systems, such as a Global System for Mobile Communications (Global System of Mobile communication, GSM) system, a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS), a Long Term Evolution (Long Term Evolution, LTE) system, an LTE frequency division duplex (Frequency Division Duplex, FDD) system, LTE time division duplex (Time Division Duplex, TDD), a Universal Mobile Telecommunications System (Universal Mobile Telecommunications System, UMTS), and a Worldwide Interoperability for Microwave Access (Worldwide Interoperability for Microwave Access, WiMAX) communications system.

It should be further understood that in the embodiments of the present invention, user equipment (User Equipment, UE) may be referred to as a terminal (Terminal), a mobile station (Mobile Station, MS), a mobile terminal (Mobile Terminal), or the like. The user equipment may communicate with one or more core networks by using a radio access network (Radio Access Network, RAN). For example, the user equipment may be a mobile phone (also referred to as a "cellular" phone) or a computer with a mobile terminal. For example, the user equipment may alternatively be a portable mobile apparatus, a pocket-sized mobile apparatus, a handheld mobile apparatus, a computer built-in mobile apparatus, or an in-vehicle mobile apparatus, which exchanges voice and/or data with the radio access network.

In the embodiments of the present invention, a base station may be a base transceiver station (Base Transceiver Station, BTS) in GSM or CDMA, may be a NodeB (NodeB, NB) in WCDMA, or may be an evolved NodeB (Evolved NodeB, eNB or eNodeB) in LTE. This is not limited in the present invention. For ease of description, in the embodiments of the present invention, all the foregoing apparatuses that provide a wireless communication function for the terminal are referred to as a base station or a BS.

LTE is developed and designed to implement low operation costs, a low delay, a high system capacity, a user data rate, high power utilization, and the like. An evolved multimedia broadcast multicast service is launched by the 3GPP and is a supplement to an existing multimedia broadcast multicast service (Multimedia Broadcast Multicast Service, MBMS).

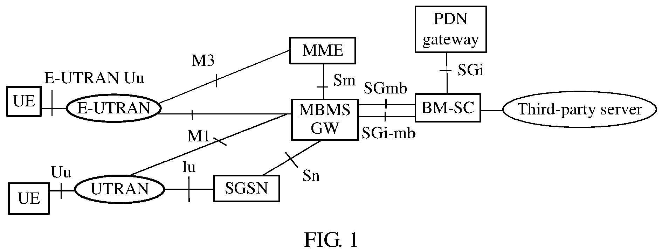

FIG. 1 is an architectural diagram of an MBMS system in an LTE system according to an embodiment of the present invention. Network elements and devices included in the MBMS system include user equipment (User Equipment, UE), an evolved universal mobile telecommunications system terrestrial radio access network (Evolved Universal Mobile Telecommunications System Terrestrial Radio Access Network, E-UTRAN), a mobility management entity (Mobility Management Entity, MME), an MBMS gateway (Gateway, GW), a broadcast multimedia service center (Broadcast Multicast service center, BMSC), a packet data network (Packet Data Network, PDN) gateway, and a content provider (Content Provider).

The UE is configured to support activation and deactivation functions of an MBMS bearer service. The E-UTRAN is configured to implement a function related to an evolved radio network, and transmit MBMS data to a designated MBMS service area.

The MME is responsible for mobility management of a control plane, such as user context and mobile state management, and allocation of a user temporary identity.

As a login point for IP multicast transmission, the PDN gateway is a user-plane anchor point between a 3GPP access network and a non-access network, and an interface for an external PDN.

The MBMS GW provides a control-plane SGmb interface between the MBMS GW and the BMSC, and provides a user-plane SGi-mb interface between the MBMS GW and the BMSC. MBMS session service data of the SGi-mb interface is encapsulated at a General Packet Radio Service Tunneling Protocol-User Plane (General Packet Radio Service Tunneling Protocol User Plane, GTPU), multicast at an M1 interface, and distributed to an evolved Node B (evolved NodeB, eNB); provides functions of multicast destination IP address allocation and M1 transmission control-plane (C-TEID) allocation; and supports multicast related protocols, to be specific, an IPv4 network supports the Internet Group Management Protocol (IGMPv3) and the PIM, and an IPv6 network supports the Multicast Listener Discovery Protocol (MLDv2) and the Protocol Independent Multicast (PIM).

The BMSC is configured to store subscription data, generate a charging record, perform member management (through a Gi interface), and determine an MBMS session transmission timetable; determine an MBMS session retransmission timetable, identify each MBMS session, and allocate TMGIs; and notify the UE of the TMGI, so that after receiving the TMGI, the UE receives a broadcast service on a transmission path identified by the TMGI.

The content provider provides broadcast content, and may be a third-party content provider that does not belong to an operator, for example, a video service provider or a television program provider.

It should be noted that this embodiment of the present invention may also be applied to the Universal Terrestrial Radio Access Network (Universal Terrestrial Radio Access Network, UTRAN for short), or the Global System for Mobile Communications (Global System for Mobile Communications, GSM for short)/Enhanced Data Rates for GSM Evolution (Enhanced Data Rates for GSM Evolution, EDGE for short) radio access network (GSM/EDGE Radio Access Network, GERAN for short). Different from an LTE network, in the UTRAN or the GERAN, functions of the MME are implemented by a serving GPRS support node (Service GPRS Supporting Node, SGSN), and functions of the serving gateway (Serving Gateway, SGW) or the packet data network (Packet Data Network, PDN) gateway (PDN Gateway, PGW) are implemented by a gateway GPRS support node (Gateway GPRS Support Node, GGSN for short).

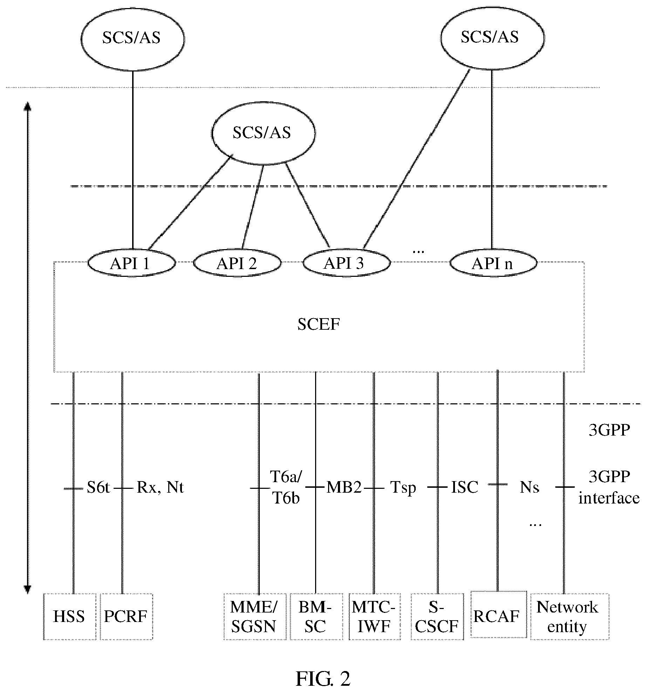

FIG. 2 is an architectural diagram of capability exposure in a 3GPP network. The 3GPP network may open network capabilities to an Internet application (Over The Top, OTT) provider. Specifically, the network capabilities include a communication capability, subscription information, UE context information, a control function, and the like. The communication capability mainly includes voice calling (voice calling), a short message service (Short Messaging Service, SMS), a multimedia messaging service (Multimedia Messaging Service, MMS), and the like. The UE subscription information mainly includes a subscription identity (Subscription identity), a feature set (feature sets), a preference (preference), and the like. The UE context information mainly includes location information (location), the control function (for example, a quality of service (Quality of Service, QoS) rule), and the like.

To open related information of the 3GPP network to a third-party application server (3rd Application), a logical function entity, that is, a service capability exposure function (Service Capability Exposure Function, SCEF) is introduced. The logical function has an interface to a network element device of a system architecture evolution (System Architect Evolution, SAE) network. A layer above the SCEF is an application (Application) layer, that is, the third-party application server. The third-party application server may establish a connection to the SCEF. The 3GPP network may send information to the third-party application server by using the SCEF, and the third-party application server may also send information to the 3GPP network by using the SCEF.

As shown in FIG. 2, the service capability exposure function (Service Capability Exposure Function, SCEF) is located between the 3GPP and a service capability server (service capability server, SCS)/an application server (Application Server, AS). The 3GPP network includes a home subscriber server (Home Subscriber Service, HSS) module, a policy and charging rules function (Policy and Charging Rule Function, PCRF) module, the MME/SGSN, the BMSC, a Machine Type Communication Interworking Function (Machine Type Communication Interworking Function, MTC-IWF) module, a serving-call session control function (Serving-Call Session Control Function, S-CSCF) module, a RAN congestion awareness function (RAN Congestion Awareness Function, RCAF), a network entity, and the like. In an eMBMS system architecture, the content provider is a type of AS. Specifically, the AS may initiate a service capability request to the SCEF by using an API function. Alternatively, the AS directly initiates a request to the network entity, and the SCEF obtains a corresponding network capability from the 3GPP network, and sends the network capability to the SCS/AS by using an API.

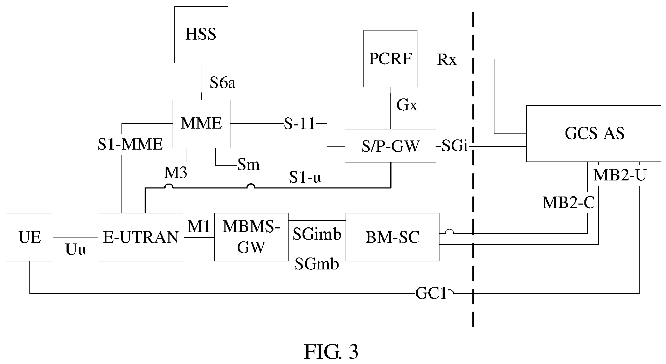

FIG. 3 is a transmission procedure of a prior-art multicast mode. Multicast transmission means that data is sent from one data source to a plurality of users in a particular area. Specifically, in a current standard protocol (TS23.682), the SCS/AS performs group message sending through SCEF broadcasting. A specific procedure is shown in FIG. 3.
101: An SCS/AS sends a temporary mobile group identity (Temporary Mobile Group Identity, TMGI) request message to an SCEF.
102: Obtain a grant between the SCEF and an HSS/a home location register (Home Location Register, HLR).
103: Configure the TMGI by using a BMSC.
104: The SCEF returns a TMGI response message to the SCS/AS.
105: Establish an application connection between UE and the SCS/AS.
106: The SCS/AS sends a group message request to the SCEF.
107: Set up a grant between the HSS/HLR and the SCEF.
108: The SCEF sends an MBMS bearer activation request message to the BMSC.
109: The BMSC returns an MBMS bearer activation response message to the SCEF.
110: The SCEF sends a group message acknowledgment to the SCS/AS.
111: Establish a session connection between an MBMS-GW/GGSN MME/SGSN and a RAN.
112: In this way, the SCS/AS can send a group message to the UE by using the SCEF, the BMSC, and the RAN.
113: The UE sends a group message response after receiving the group message.

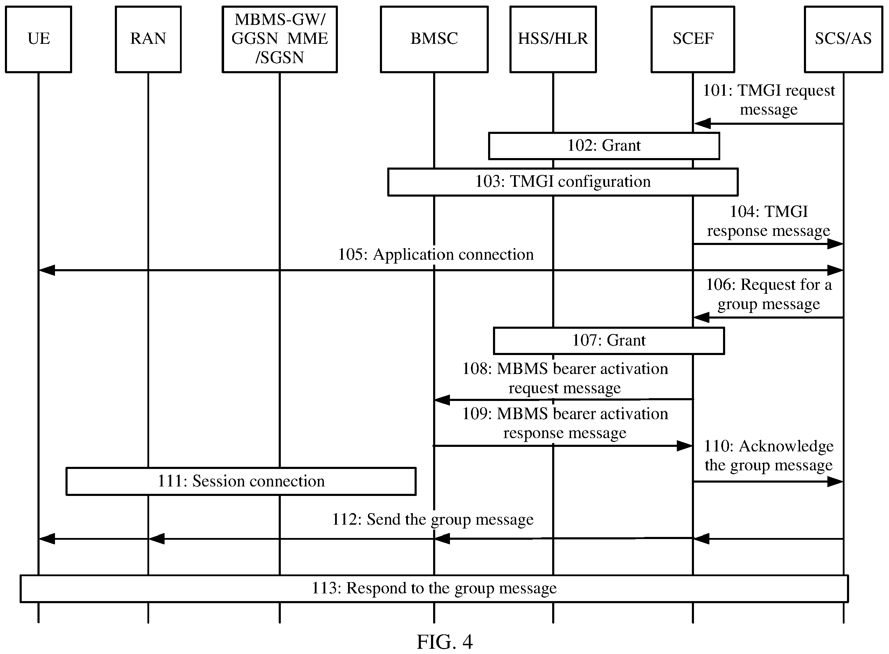

FIG. 4 is a schematic diagram of a group communication service (Group Communication Service, GCS) system in the prior art. A group communication service application server (GCS AS) may also be considered as a third-party application server. The GCS AS is connected to a BMSC by using an MB2 interface. Therefore, a third-party application server provider needs to reconstruct a network to support the MB2 interface (for example, deploy a Diameter (Diameter) protocol stack). This brings upgrading and network deployment complexity to a large quantity of OTT providers (that is, third-party application servers) that widely exist currently.

In the group communication service system, the third-party application server needs to learn of a network transmission capability of an operator network, and this imposes a relatively high requirement on deployment of the third-party application server. In addition, the third-party application server determines, based on the network transmission capability, whether a multicast transmission mode or a unicast transmission mode is used for service data, without considering location information or a service requirement of a terminal device, or the like. This causes a waste of network resources.

It should be understood that in this embodiment of the present invention, a server may be a content provider, and is configured to provide broadcast content. The server may be a third-party content provider that does not belong to an operator, for example, an OTT provider. OTT means that a variety of application services are provided for a user by using the Internet. Different from a communication service provided by an existing operator, this application uses only the operator network, and the services are provided by a third party different from the operator. At present, a typical OTT service includes an Internet television service and a video service. For ease of description, an SCS/AS is used for description in this embodiment of the present invention, but the present invention is not limited thereto.

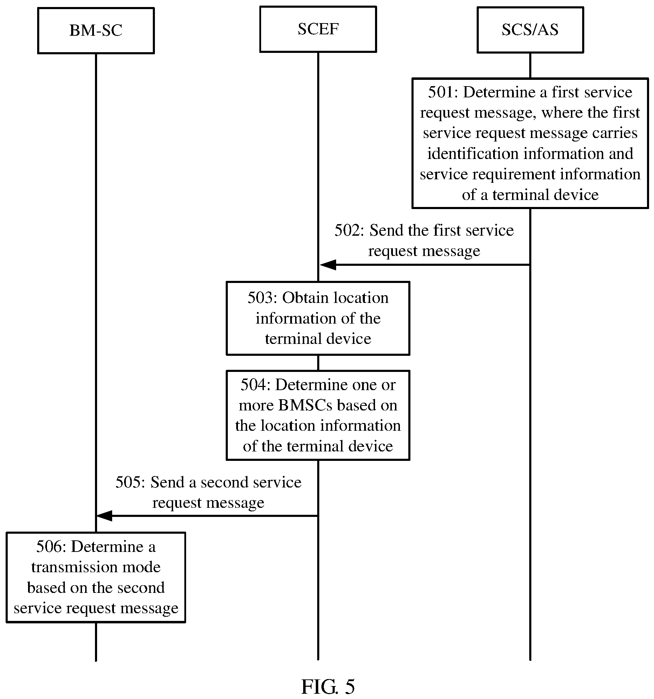

FIG. 5 is an interaction flowchart of a service processing method according to an embodiment of this application. Meanings of terms in this embodiment of this application are the same as those in the foregoing embodiments.

It should be noted that this is merely intended to help a person skilled in the art better understand the embodiments of this application, but not to limit the scope of the embodiments of this application.

501: A server determines a first service request message.

The first service request message is used to confirm a transmission mode. A name of the first service request message is not limited in the present invention. In other words, other messages, information, and the like having such a function also fall within the protection scope of the present invention.

Optionally, the method further includes: obtaining, by the server, identification information of a terminal device and/or service requirement information of the terminal device; and the determining, by a server, a first service request message includes: determining, by the server, the first service request message, where the first service request message carries the identification information of the terminal device and/or the service requirement information of the terminal device.

Specifically, the service requirement information may be a service content identifier. For example, in a process in which UE establishes a connection to an SCS/AS, the SCS/AS may learn of identification information of the UE and a service content identifier corresponding to the UE. Alternatively, the UE may proactively notify the SCS/AS of a requirement for service data, and the like. In this way, the SCS/AS can learn of a type of service data required by the UE.

The service requirement information may alternatively be a session identifier. For example, when UE establishes a connection to an SCS/AS, the SCS/AS allocates one or more session identifiers, and each session identifier may be used to identify service data requested by the UE.

It should be understood that the terminal device may be considered as a type of terminal device. In other words, the terminal device may be one terminal device or a plurality of terminal devices, and the present invention is not limited thereto.

It should be further understood that the identification information of the terminal device and the service requirement information of the terminal device may be in a same service request message, or may be in different service request messages.

Optionally, the method further includes: obtaining, by the server, time information of receiving service data by the terminal device.

During connection establishment with the UE, the SCS/AS may further obtain the time information of receiving the service data by each of the terminal device, or may further obtain other data information, and the like. For example, the UE may receive the service data at a particular time point, or during a time period in which the service data can be received, or immediately. This is not limited in the present invention.

It should be understood that the service requirement information of the UE, the identification information of the UE, and the time information of receiving the service data may be obtained together, or may be obtained separately. This is not limited in the present invention.

Optionally, in an embodiment of the present invention, the service data is video data.

For example, if the service data is a video service, the SCS/AS may learn of a video program required by the UE, a time of receiving the video program, and the like. Alternatively, the UE notifies the SCS/AS of a required video program, a time of receiving the video program, and the like.

It should be understood that the service data may alternatively be a service such as audio or an image. This is not limited in the present invention.

Optionally, the method further includes: determining, by the server, a service data transmission mode; and sending, by the server, the first service request message to a service capability exposure function SCEF includes: sending, by the server, the first service request message to the SCEF, where the first service request message further carries a transmission mode notification message, and the transmission mode notification message is used to notify a BMSC of the service data transmission mode.

Specifically, the service data transmission mode determined by the server may be determined according to a protocol between the server and an operator, or may be determined by the server based on information such as a quantity of users who receive data and a location of the user. This is not limited in the present invention.

Optionally, in an embodiment of the present invention, the method further includes: obtaining, by the server, a network transmission capability by using the SCEF; and the determining, by the server, a service data transmission mode includes: determining, by the server, the transmission mode based on the network transmission capability.

Specifically, the SCS/AS may obtain the network transmission capability of an operator network by using the SCEF, where the network transmission capability refers to a data transmission mode, multicast or unicast, that can be supported by the operator. The SCS/AS determines the service data transmission mode based on the network transmission capability, and notifies the SCEF by sending transmission mode notification information.

502: The SCS/AS sends the first service request message to the SCEF.

The SCS/AS sends the first service request message to the SCEF. For example, the SCS/AS may send the first service request message to the SCEF by invoking an API function or in another manner. This is not limited in the present invention. The first service request message includes the identification information of the UE, the service requirement information of the UE, and the like. Alternatively, the first service request message further includes the time information of receiving the service data by the UE, and the like. Alternatively, the first service request message further includes identification information of the SCS/AS. For ease of description, the SCS/AS may also be considered as a type of service requirement information.

503: The SCEF obtains location information of the terminal device based on the identification information of the UE carried in the first service request message.

Specifically, a step of obtaining, by the SCEF, the location information of the UE is: sending, by the SCEF, a monitoring request message to an HSS, where the monitoring request message includes the identification information of the UE. The HSS determines, based on the identification information of the UE, an MME to which the UE is attached, and sends a subscription data request message to the MME, where the subscription data request message includes information such as a monitoring type. The MME reports to the SCEF based on the collected location information of the UE.

Optionally, the method further includes: sending, by the SCEF, paging indication information to the mobility management entity MME, where the paging indication information is used to instruct the MME to send a paging message to a terminal device that is in an idle state, and the paging message is used to obtain location information of the terminal device that is in the idle state; and the obtaining, by the SCEF, location information of the terminal device includes: obtaining, by the SCEF, location information of at least one terminal device that is in a connected state.

Specifically, the SCEF sends the paging indication information to the mobility management entity MME, where the paging indication information is used to instruct the MME to send the paging message to the terminal device that is in the idle state in the terminal device. In this case, the MME can switch a state of the terminal device from the idle state to the connected state, so that the SCEF can obtain location information of each terminal device from the MME.

It should be understood that the paging indication information may be sent after the first service request message sent by the SCS/AS is received.

It should be further understood that the paging indication information is used to instruct the MME to send the paging message to the terminal device that is in the idle state. A name of the paging indication information is not limited in the present invention. In other words, other messages, information, and the like having such a function also fall within the protection scope of the present invention.

504: The SCEF determines one or more BMSCs based on the location information of the terminal device.

Optionally, in an embodiment of the present invention, the method further includes: obtaining, by the SCEF, the location information of the terminal device, and determining, by the SCEF based on the location information of the terminal device, the one or more BMSCs to which the terminal device belongs.

Specifically, after the SCEF obtains the identification information of the UE and the service requirement information of the UE, the SCEF may obtain the location information of the UE based on the identification information of the UE. In this way, the SCEF can determine, based on the location information, the one or more BMSCs serving the UE.

It should be understood that quantities of UEs and BMSCs are not necessarily the same. In other words, there may be a plurality of UEs belonging to a same BMSC. For example, there are six UEs (UE1, UE2, UE3, UE4, UE5, and UE6), where the UE1 and the UE3 belong to a BMSC1, the UE2, the UE4, and the UE6 belong to a BMSC2, and the UE6 belongs to a BMSC3.

505: The SCEF sends a second service request message to the BMSC.

Optionally, the first service request message is used as the second service request message.

After receiving the first service request message, the SCEF may directly send the first service request message to the BMSC. In other words, the first service request message is the same as the second service request message.

Alternatively, the SCEF generates a new service request message based on other information, and sends the new service request message to the BMSC. Therefore, the SCEF can send the second service request message to the one or more selected BMSCs, thereby improving service quality of serving the UE.

It should be understood that a name of the second service request message is not limited in the present invention. In other words, other messages, information, and the like having functions of the second service request message also fall within the protection scope of the present invention.

It should be further understood that if the first service request message carries both the identification information of the terminal device and the service requirement information of the terminal device, the second service request message may carry both the identification information of the terminal device and the service requirement information of the terminal device, or may carry only either of the identification information of the terminal device and the service requirement information of the terminal device.

Optionally, in an embodiment of the present invention, the method further includes: determining, by the SCEF, the transmission mode, where the second service request message includes a transmission mode notification message, and the transmission mode notification information is used to notify the BMSC of the transmission mode.

The SCEF may determine the transmission mode, and notify the BMSC of the transmission mode by adding the transmission mode notification information (represented as the second service request message) to the first service request message. This can avoid a waste of resources and improve resource utilization.

It should be understood that in addition to the transmission mode notification information, the second service request message may further carry any information or all information carried in the first service request message. This is not limited in the present invention.

For example, the second service request message may carry the time information of receiving the service data by the UE, so that the BMSC can further consider a time factor of receiving data by the UE, to determine the service data transmission mode. If the second service request message does not carry the time information, after receiving the second service request message, the BMSC may immediately perform transmission path establishment, service data transmission, and the like.

Optionally, the SCEF may further statically configure a correspondence between a service area and a cell identity, so as to determine the service data transmission mode based on the correspondence.

Optionally, in an embodiment of the present invention, the determining, by the SCEF, the transmission mode includes: determining, by the SCEF, the transmission mode based on configuration policy information.

Specifically, the SCEF determines the corresponding configuration policy information based on the service requirement information included in the received first service request message, for example, server subscription information, and determines the transmission mode based on the configuration policy information.

506: The BMSC sends the second service request message sent by the service capability exposure function SCEF, and determines the service data transmission mode based on the second service request message, where the transmission mode is unicast transmission or multicast transmission.

The BMSC receives a service request message (represented as the second service request message) sent by the SCEF, where the second service request message includes the identification information of the UE, the service requirement information, the time information of receiving the service data, and the like.

The BMSC receives the second service request message, where the second service request message carries the identification information of the UE, the service requirement information of the UE, and the like. Alternatively, the second service request message further carries the time information of receiving the service data by the UE, and the like. Alternatively, the second service request message further carries the identification information of the SCS/AS, and the like. The BMSC determines, based on information in the second service request message, the service data transmission mode to be unicast transmission or multicast transmission. In this case, the server does not need to understand the network transmission capability. This reduces complexity of server deployment.

For example, at a same time point or in a same time period, service content required by a plurality of users in an area is the same. In this case, multicast transmission may be used for the plurality of users. If service content required by users or time periods of receiving service data are different, unicast transmission is used.

Optionally, the service request message is sent by the SCEF to one BMSC or a plurality of BMSCs, where the one BMSC or the plurality of BMSCs is/are a BMSC/BMSCs that is/are determined by the SCEF based on the obtained location information of the terminal device and to which the terminal device belongs.

Optionally, the method further includes:
obtaining, by the BMSC, location information of the terminal device; and
the determining, by the BMSC, a service data transmission mode based on the service request message includes:
determining, by the BMSC, the transmission mode based on a correspondence between a service area and a cell identity, the identification information of the terminal device, the service requirement information, and the location information of the terminal device.

Specifically, the second service request message may further carry the location information of the UE, and the BMSC determines the data transmission mode based on the received location information of the UE, and service area (Service Area) information and cell identity list (Cell ID list) information that are configured on the BMSC.

For example, the BMSC determines, based on a correspondence between service area information and cell identity list information and the second service request message, that there is only one UE in each multicast cell. In this case, using multicast transmission causes a waste of resources. Therefore, the determining, by the BMSC, the transmission mode based on the correspondence between the service area information and the cell identity list information, and the information in the second service request message. This improves resource utilization.

Optionally, in an embodiment of the present invention, the method further includes: determining, by the BMSC, a network transmission capability, and the determining, by the BMSC, the service data transmission mode based on the service request message includes: determining, by the BMSC, the transmission mode based on the service request message and the network transmission capability.

Specifically, the BMSC determines the service data transmission mode based on a quantity of terminals receiving a service data stream, service stream information, and user location information, and optionally, further based on the time information of receiving the service data.

Optionally, the determining, by the BMSC, the service data transmission mode based on the service request message includes: determining, by the BMSC, the transmission mode based on the service requirement information and configuration information on the BMSC.

Specifically, the BMSC may also configure transmission policy information, such as SCS/AS subscription information. The subscription information may be a data stream transmission mode of the SCS/AS, and after receiving the service request message, the BMSC may determine the data stream transmission mode based on the service requirement information.

Optionally, the service request message further carries the location information of the terminal device; and
the obtaining, by the BMSC, location information of the terminal device includes:
obtaining, by the BMSC, the location information of the terminal device from the service request message.

Specifically, if the service request message (represented as the second service request message) carries the location information of the terminal device, the BMSC may obtain the location information from the second service request message.

Alternatively, the BMSC may obtain the location information of the terminal device directly from the MME or another device. This is not limited in the present invention.

Optionally, the determining, by the BMSC, the transmission mode based on a correspondence between a service area and a cell identity, the identification information of the terminal device, the service requirement information, and the location information of the terminal device includes:
determining, by the BMSC, a quantity of terminal devices based on the identification information of the terminal device; and
determining, by the BMSC, the transmission mode based on the quantity of terminal devices, the service requirement information, the location information of the terminal device, and the correspondence.

Specifically, the BMSC may determine the quantity of terminal devices based on the identification information of the terminal device and the like, so that the BMSC determines the service data transmission mode based on the quantity of terminal devices, the service requirement information of the terminal device, the location information of the terminal device, and the correspondence between the service area and the cell identity.

It should be understood that the identification information of the terminal device may be identification information of each of a plurality of terminal devices or identification information of one terminal device, or group identification information of a plurality of terminal devices, or the like. This is not limited in the present invention.

Optionally, the second service request message further carries transmission mode notification information, and the transmission mode notification information is used to notify the BMSC of the service data transmission mode.

Specifically, the BMSC may determine a transmission mode (which may be represented as a first transmission mode) based on the network transmission capability, the identification information of the UE, the service requirement information, and the time information of receiving the service data. Alternatively, the BMSC determines a transmission mode (which may be represented as a second transmission mode) based on the transmission mode notification information. Alternatively, the BMSC may further determine multicast transmission or unicast transmission based on consistency between the first transmission mode and the second transmission mode. For example, if the first transmission mode and the second transmission mode are both multicast transmission, multicast transmission is used for the service data; if the first transmission mode and the second transmission mode are both unicast transmission, unicast transmission is used for the service data. If the first transmission mode and the second transmission mode are inconsistent, unicast transmission is used for the service data; or if the first transmission mode and the second transmission mode are inconsistent, multicast transmission is used for the service data. This is not limited in the present invention.

It should be understood that the BMSC performs an operation based on the transmission mode in the received transmission mode notification information. The transmission mode may be determined by the server or the SCEF. This is not limited in the present invention.

Optionally, in an embodiment of the present invention, the method further includes: receiving, by the server, a service request response message; and establishing, by the server, a user-plane transmission path to the BMSC based on the service request response message.

Specifically, the SCEF receives one or more service request response messages sent by the one or more BMSCs, where the service request response message is used by the server to establish the user-plane transmission path to the BMSC. The SCEF sends the one or more service request response messages to the server. In this way, the server can establish, based on the service request response message, a user-plane transmission path to each BMSC sending the service request response message.

Optionally, in an embodiment of the present invention, the service request response message includes an IP address and port number information of the BMSC.

After determining the service data transmission mode, the BMSC sends the service request response message to the server by using the SCEF. After receiving the service request response message, the server establishes a connection to the one or more BMSCs to which the terminal device belongs. Specifically, the service request response message includes the user-plane IP address and port number information, and the server establishes the user-plane transmission path to the one or more BMSCs based on the user-plane IP address and port number information.

Optionally, in an embodiment of the present invention, the method further includes: receiving, by the SCEF, a plurality of service request response messages sent by the plurality of BMSCs, where the service request response message is used by the server to establish a user-plane transmission path to the BMSC;
sending, by the SCEF to the server, a first service request response message in the plurality of service request response messages; and
sending, by the SCEF, a second service request response message set to a first BMSC corresponding to the first service request response message, where the second service request response message set is all service request response messages different from the first service request response message in the plurality of service request response messages.

Specifically, after receiving at least one service request response message sent by the one or more BMSCs, the SCEF may select the one BMSC or one of the plurality of BMSCs as a master BMSC, and other BMSCs are a slave BMSC. Then, the SCEF forwards a service request response message of the master BMSC to the SCS/AS, and sends, to the master BMSC, a user-plane IP address and user-plane port number information in a service request response message of the slave BMSC. The master BMSC establishes a user-plane data transmission path to each slave BMSC based on a user-plane IP address and port number of each slave BMSC, and the SCS/AS establishes a user-plane data transmission path to the master BMSC based on the user-plane IP address and port number. In this way, the SCS/AS can directly send the service data to the master BMSC, and send the service data to the slave BMSC through forwarding by the master BMSC.

Optionally, in an embodiment of the present invention, when the BMSC determines the service data transmission mode to be unicast transmission, the BMSC triggers a unicast transmission process, for example, establishes a PDN connection and sets up a corresponding bearer. This is not limited in the present invention.

Optionally, in an embodiment of the present invention, when the BMSC determines the service data transmission mode to be multicast transmission, the method further includes: generating, by the BMSC, a temporary mobile group identity TMGI, where the TMGI is used to identify a service data transmission path; and sending, by the BMSC, the TMGI to the terminal device, so that the terminal device receives the service data on the transmission path identified by the TMGI.

Specifically, when the BMSC determines the service data transmission mode to be multicast transmission, the BMSC generates the TMGI, where the TMGI is used to identify the service data transmission path. The BMSC sends the TMGI to the UE that belongs to the BMSC, so that the UE receives the required service data on the transmission path identified by the TMGI.

Optionally, in an embodiment of the present invention, the sending, by the BMSC, the TMGI to the terminal device includes: sending, by the BMSC, the TMGI to the terminal device by sequentially using the SCEF and the server.

The BMSC may directly send the TMGI to the UE that belongs to the BMSC, so that the UE receives the required service data on the transmission path identified by the TMGI. Alternatively, the BMSC may send the TMGI to the UE through forwarding by the SCEF and the SCS/AS.

It should be understood that when the TMGI is forwarded by the SCEF and the SCS/AS, the TMGI may be sent directly, or may be carried in the service request response message. This is not limited in the present invention.

It should be further understood that in the process of sending, by the BMSC, the TMGI to the UE, the TMGI may further carry identification information of the service data, so that when the UE receives the TMGI, the UE can learn which type of service data can be received on the transmission path identified by the TMGI.

Therefore, according to the service processing method in this embodiment of the present invention, the BMSC receives the service request message that carries the identification information and the service requirement information of the terminal device and that is sent by the service capability exposure function SCEF, and determines, based on the service request message, the service data transmission mode to be unicast transmission or multicast transmission, so that the BMSC can determine the transmission mode based on a service request, so as to properly configure a network resource and improve network resource utilization.

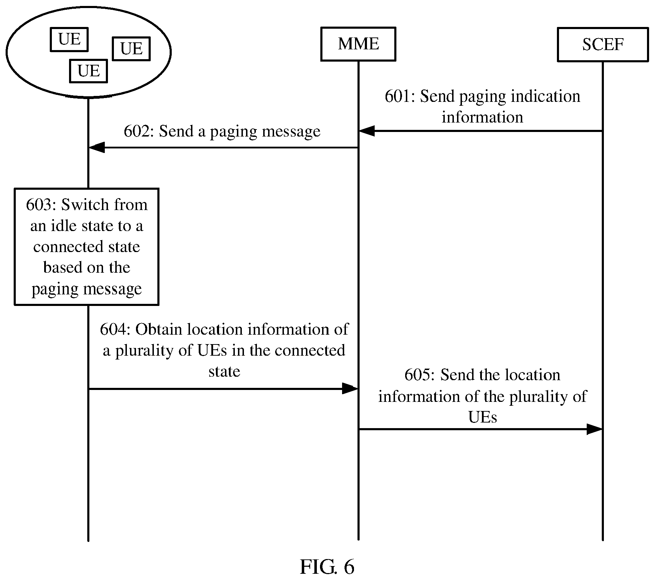

FIG. 6 is an interaction flowchart of a service processing method according to an embodiment of this application. Meanings of terms in this embodiment of this application are the same as those in the foregoing embodiments.

It should be noted that this is merely intended to help a person skilled in the art better understand the embodiments of this application, but not to limit the scope of the embodiments of this application.

601: An MME receives paging indication information sent by an SCEF, where the paging indication information includes identification information of a terminal device.

602: The MME sends a paging message to the terminal device based on the identification information of the terminal device.

Optionally, the MME sends, based on the identification information of the terminal device, the paging message to a terminal device that is in an idle state.

603: The terminal device switches, based on the paging message, the terminal device from the idle state to a connected state.

604: The MME obtains location information of the terminal device that is switched to the connected state.

605: The MME sends location information of UE to the SCEF.

It should be understood that for a specific indication manner of the foregoing corresponding information, reference may be made to the foregoing embodiments. For brevity, details are not described herein again.

Therefore, according to the service processing method in this embodiment of the present invention, the MME receives the paging indication information that is sent by the SCEF and that includes an identifier of the terminal device, and sends the paging message based on the paging indication information, to obtain location information of each of the terminal device; sends the location information of the terminal device to the SCEF, so that the SCEF determines, based on the location information, a BMSC to which the terminal device belongs; and sends, to the BMSC, a service request message that carries the identification information and service requirement information of the terminal device, so that the BMSC determines, based on a service requirement of the terminal device, a service data transmission mode to be unicast transmission or multicast transmission, so as to properly configure a network resource and improve network resource utilization.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

In the group communication system shown in FIG. 4, a third-party application server needs to be connected to a BMSC by using an MB2 interface. Therefore, a third-party application server provider needs to reconstruct a network to support the MB2 interface (for example, deploy a Diameter protocol stack, and the like). This brings upgrading and network deployment complexity to a large quantity of OTT providers (that is, third-party application servers) that widely exist currently.

A GCS AS determines, based on a network capability, to use a multicast mode or a unicast mode. If the multicast mode is used, the GCS AS obtains a temporary mobile group identity (Temporary Mobile Group Identity, TMGI) from a BMSC, and sends the TMGI to UE.

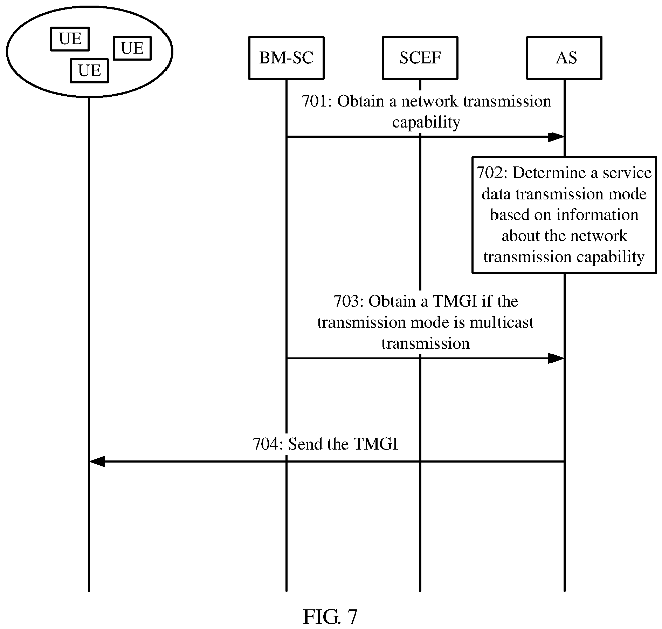

FIG. 7 is an interaction flowchart of a service processing method according to an embodiment of this application. Meanings of terms in this embodiment of this application are the same as those in the foregoing embodiments.

It should be noted that this is merely intended to help a person skilled in the art better understand the embodiments of this application, but not to limit the scope of the embodiments of this application.

701: An SCS/AS obtains a network transmission capability by using an SCEF.

Specifically, the SCS/AS may obtain the network transmission capability by invoking an API function and sending a service capability request to the SCEF.

702: The SCS/AS determines a service data transmission mode based on the network transmission capability, where the transmission mode is unicast transmission or multicast transmission.

Optionally, the SCS/AS may further obtain identification information of a terminal device and/or service requirement information of the terminal device, and the SCS/AS determines the service data transmission mode based on the network transmission capability, the identification information of the terminal device, and/or the service requirement information of the terminal device.

703: If the transmission mode is multicast transmission, the SCS/AS obtains a TMGI by using the SCEF.

It should be understood that a specific procedure of obtaining the TMGI by the SCS/AS may be step 101 to step 104 in FIG. 4. To avoid repetition, details are not described herein again.

704: The SCS/AS sends the TMGI to the terminal device, so that the terminal device receives service data on a transmission path identified by the TMGI.

It should be understood that a procedure of sending the TMGI by the SCS/AS to the terminal device and transmitting data through multicasting may be step 105 to step 113 in FIG. 4. To avoid repetition, details are not described herein again.

It should be further understood that for a specific indication manner of the foregoing corresponding information, reference may be made to the foregoing embodiments. For brevity, details are not described herein again.

Therefore, according to the service processing method in this embodiment of the present invention, the server obtains the network transmission capability by using the SCEF, and determines, based on the network transmission capability, the service data transmission mode to be unicast transmission or multicast transmission, so as to prevent service data transmission from relying on an MB2 interface. This reduces complexity of server deployment.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

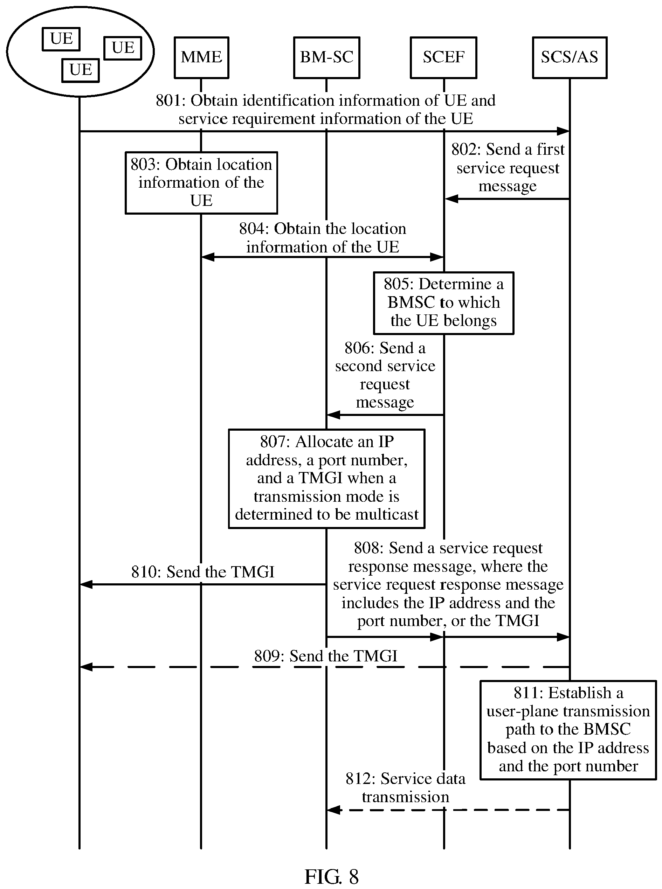

FIG. 8 is an interaction flowchart of a service processing method according to an embodiment of this application. Meanings of terms in this embodiment of this application are the same as those in the foregoing embodiments.

It should be noted that this is merely intended to help a person skilled in the art better understand the embodiments of this application, but not to limit the scope of the embodiments of this application.

801: An SCS/AS obtains identification information of UE and service requirement information of the UE.

Optionally, the SCS/AS may further obtain time information of receiving service data by the UE.

802: The SCS/AS sends a first service request message to an SCEF, where the first service request message carries the identification information of the UE and the service requirement information of the UE.

Optionally, the first service request message further carries identification information of the SCS/AS. For ease of description, the SCS/AS may also be used as a type of service requirement information.

803: An MME obtains location information of the UE.

Optionally, if there is UE in an idle state in the UE, the UE in the idle state may be switched to a connected state by sending a paging message, so that the MME can obtain the location information of the UE (in the connected state).

804: The MME sends the location information of the UE to the SCEF.

Specifically, a detailed step of obtaining the location information of the UE by the SCEF is shown in FIG. 6, and details are not described herein again.

805: The SCEF determines one or more BMSCs to which the UE belongs, based on the location information of the UE, and one of the identification information of the UE and the service requirement information of the UE that are in the first service request message, or the time information of receiving service data by the UE, and the like.

806: The SCEF sends a second service request message to the one or more BMSCs.

The first service request message may be used as the second service request message and be sent to the BMSC.

807: Each of the one or more BMSCs determines the service data transmission mode based on the received service request message and a network transmission capability.

If the BMSC determines the service data transmission mode to be a multicast mode, an IP address, a port number, and a TMGI are allocated.

808: Send a service request response message to the SCS/AS by using the SCEF, where the service request response message includes a user-plane IP address and user-plane port number information.

Optionally, the service request response message further includes the TMGI.

809: The SCS/AS sends the carried TMGI to the UE.

810: A BMSC that determines multicast transmission sends a corresponding TMGI to corresponding UE.

It should be understood that, only one of a TMGI sending manner in step 808 and step 809 and a manner of sending the TMGI to the UE in step 810 may be selected; or the two manners may be simultaneously performed, and whether TMGIs obtained in the two manners are the same is determined, so as to further determine correctness.

811: The SCS/AS establishes a user-plane transmission path to the BMSC based on the IP address and a port number.

812: The SCS/AS sends service data to the BMSC, so that the UE can receive the service data on a path identified by the TMGI.

It should be understood that for a specific indication manner of the foregoing corresponding information, reference may be made to the foregoing embodiments. For brevity, details are not described herein again.

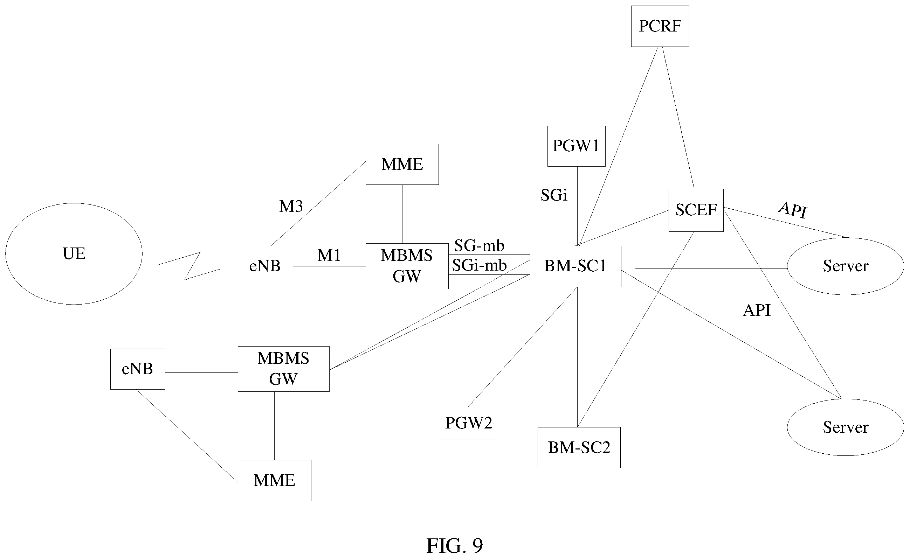

In conclusion, as shown in FIG. 9, a server obtains service requirement messages of a plurality of terminal devices and identification information of the plurality of terminal devices, and sends a service request message including the service requirement messages of the plurality of terminal devices and the identification information of the plurality of terminal devices to an SCEF. The SCEF obtains location information of the plurality of terminal devices based on the identification information, and determines, based on the location information, two BMSCs (denoted as a BMSC1 and a BMSC2) to which the plurality of terminal devices belong. The SCEF sends service request messages separately to the BMSC1 and the BMSC2, and the BMSC1 and the BMSC2 separately determine service data transmission modes based on the received service request messages. If the transmission modes determined by the BMSC1 and the BMSC2 are both multicast transmission, the BMSC1 and the BMSC2 both generate IP addresses, port numbers, and TMGIs, and send the respective IP addresses and port numbers to a server by using the SCEF. The server establishes user-plane transmission paths to the BMSC1 and the BMSC2 based on the respective IP addresses and port numbers. In addition, the BMSC1 and the BMSC2 send the generated TMGIs to corresponding terminal devices. The terminal devices receive required service data on transmission paths identified by the TMGIs.

Therefore, according to the service processing method in this embodiment of this application, the BMSC receives the service request message that carries the identification information and the service requirement information of the terminal device and that is sent by the service capability exposure function SCEF, and determines, based on the service request message, the service data transmission mode to be unicast transmission or multicast transmission, so that the BMSC can determine the transmission mode based on a service request of the server, so as to properly configure a network resource and improve network resource utilization.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

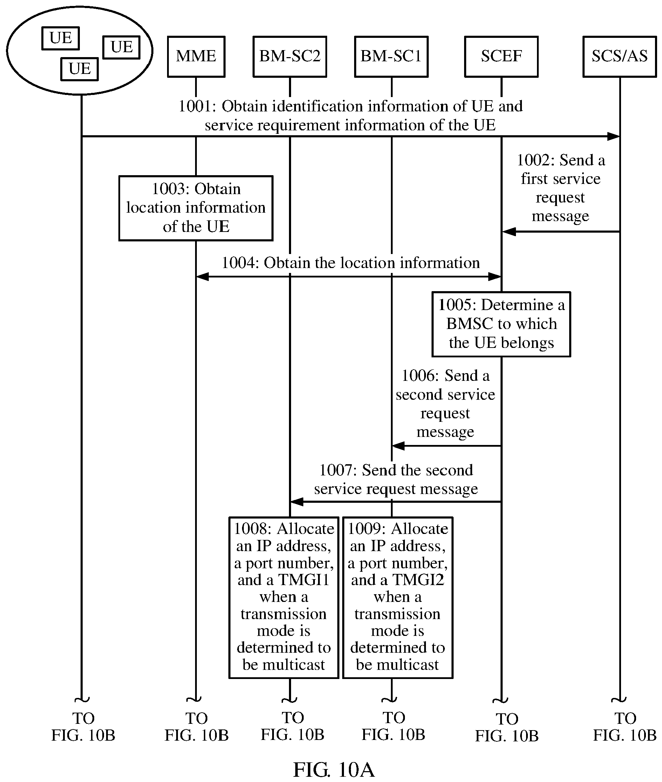

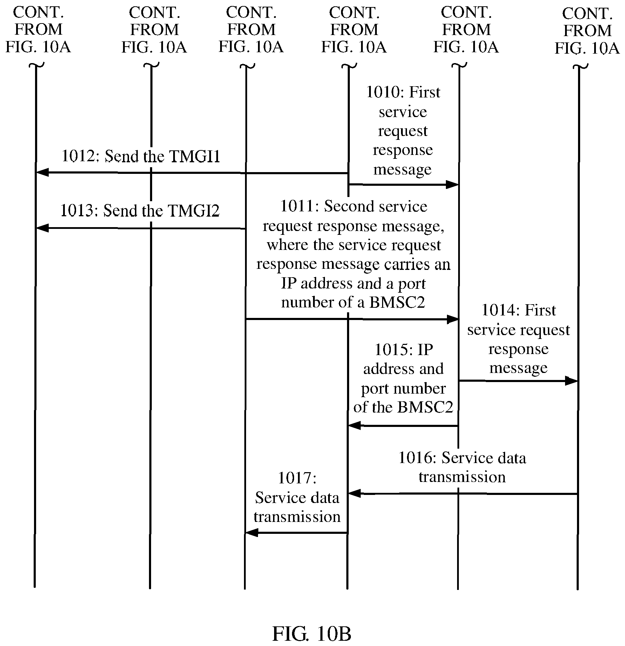

FIG. 10A and FIG. 10B are an interaction flowchart of a service processing method according to an embodiment of this application. Meanings of terms in this embodiment of this application are the same as those in the foregoing embodiments.

It should be noted that this is merely intended to help a person skilled in the art better understand the embodiments of this application, but not to limit the scope of the embodiments of this application.

1001: An SCS/AS obtains identification information of UE and service requirement information of the UE.

Optionally, the SCS/AS may further obtain time information of receiving service data by the UE.

1002: The SCS/AS sends a first service request message to an SCEF, where the first service request message carries the identification information of the UE and the service requirement information of the UE.

Optionally, the first service request message further carries identification information of the SCS/AS. For ease of description, the SCS/AS may also be used as a type of service requirement information.

1003: An MME obtains location information of the UE.

Optionally, if there is UE in an idle state in the UE, the UE in the idle state may be switched to a connected state by sending a paging message, so that the MME can obtain the location information of the UE (in the connected state).

Specifically, a detailed step of obtaining the location information of the UE by the SCEF is shown in FIG. 6, and details are not described herein again.

1004: The MME sends the location information of the UE to the SCEF.

1005: The SCEF determines one or more BMSCs to which the UE belongs, based on the location information of the UE, and one of the identification information of the UE and the service requirement information of the UE that are in the first service request message, or the time information of receiving service data by the UE, and the like.

1006: The SCEF sends a second service request message to each of the one or more BMSCs.

This embodiment of the present invention is described by using an example in which the UE belongs to two BMSCs, but the present invention is not limited thereto. For example, the SCEF sends the second service request message to a BMSC1. The first service request message may be used as the second service request message.

1007: The SCEF sends the second service request message to a BMSC2.

1008: The BMSC1 determines a service data transmission mode based on the received second service request message and a network transmission capability.

If the BMSC1 determines the service data transmission mode to be a multicast mode, an IP address, a port number, and a TMGI are allocated.

1009: The BMSC2 determines a service data transmission mode based on the received second service request message and a network transmission capability.

If the BMSC2 determines the service data transmission mode to be a multicast mode, an IP address, a port number, and a TMGI are allocated.

1010: The BMSC1 sends a first service request response message to the SCEF, where the first service request response message includes a user-plane IP address and user-plane port number information of the BMSC1.

1011: The BMSC2 sends a second service request response message to the SCEF, where the second service request response message includes a user-plane IP address and user-plane port number information of the BMSC2.

1012: The BMSC1 sends a TMGI1 to the UE.

1013: The BMSC2 sends a TMGI2 to the UE.

1014: The SCEF determines, based on a first request response message and a second request response message, the BMSC1 as a master BMSC and the BMSC2 as a slave BMSC, and forwards the first service request response message to the SCS/AS.

1015: The SCEF sends the IP address and the port number in the second service request response message to the master BMSC (namely, the BMSC1).

1016: The SCS/AS establishes a user-plane transmission path to the BMSC1 based on the user-plane IP address and port number information of the BMSC1 in the first service request response message, so as to transmit service data.

1017: The BMSC1 establishes a user-plane transmission path to the BMSC2 based on the user-plane IP address and port number information of the BMSC2 in the second service request response message, so as to send the obtained service data to the BMSC2.

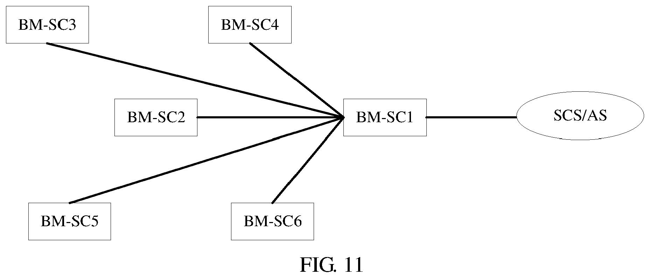

In conclusion, as shown in FIG. 11, a server obtains service requirement messages of a plurality of terminal devices and identification information of the plurality of terminal devices, and sends a service request message carrying the service requirement messages of the plurality of terminal devices and the identification information of the plurality of terminal devices to an SCEF. The SCEF obtains location information of the plurality of terminal devices based on the identification information, and determines, based on the location information, six BMSCs (denoted as a BMSC1, a BMSC2, a BMSC3, a BMSC4, a BMSC5, and a BMSC6) to which the plurality of terminal devices belong. The SCEF sends a service request message separately to each BMSC, and each BMSC separately determines a service data transmission mode based on the received service request message. If transmission modes determined by the six BMSCs are all multicast transmission, each BMSC generates an IP address, a port number, and a TMGI, and sends the respective IP address and port number to the SCEF. The SCEF may select a BMSC as a master BMSC (for example, the master BMSC is denoted as the BMSC1), and sends an IP address and a port number of the BMSC1 to the server. The server establishes a user-plane transmission path to the BMSC1 based on the IP address and the port number of the BMSC1. In addition, the SCEF sends IP addresses and port numbers of other BMSCs to the BMSC1, and the BMSC1 separately establishes user-plane transmission paths to the other BMSCs based on the respective IP addresses and port numbers. The server sends service data to the BMSC1, to send the service data to each of the other BMSCs through forwarding by the BMSC1. Each BMSC sends the respectively generated TMGI to a corresponding terminal device. The terminal device receives required service data on a transmission path identified by the TMGI.

Therefore, according to the service processing method in this embodiment of this application, the BMSC receives the service request message that carries the identification information and the service requirement information of the terminal device and that is sent by the service capability exposure function SCEF, and determines, based on the service request message, the service data transmission mode to be unicast transmission or multicast transmission, so that the BMSC can determine the transmission mode based on a service request of the server, so as to properly configure a network resource and improve network resource utilization.

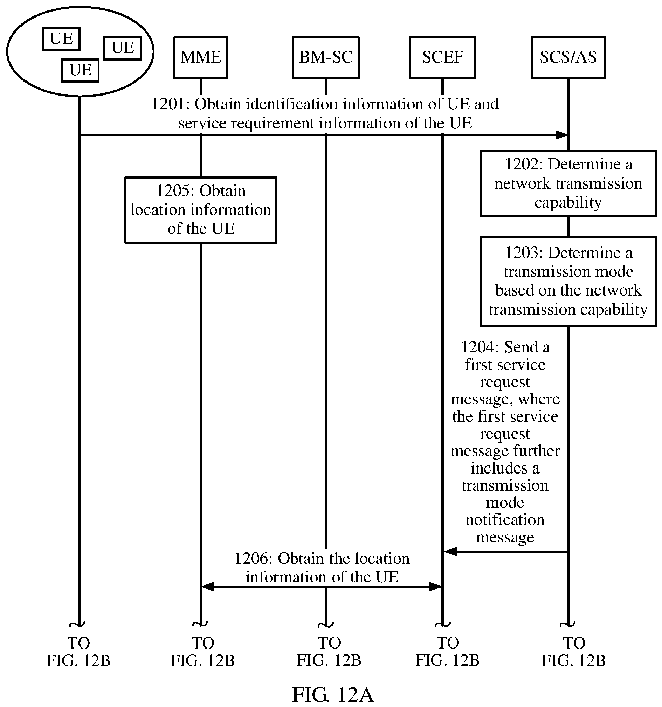

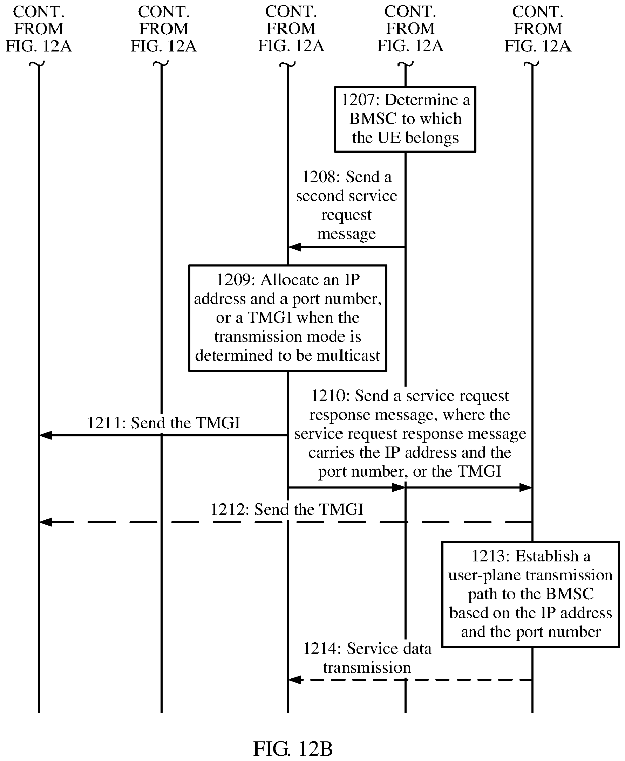

FIG. 12A and FIG. 12B are an interaction flowchart of a service processing method according to an embodiment of this application. Meanings of terms in this embodiment of this application are the same as those in the foregoing embodiments.

It should be noted that this is merely intended to help a person skilled in the art better understand the embodiments of this application, but not to limit the scope of the embodiments of this application.

1201: An SCS/AS obtains identification information of UE and service requirement information of the UE.

Optionally, the SCS/AS may further obtain time information of receiving service data by the UE.

1202: The SCS/AS determines a network transmission capability.

For example, a service data transmission mode determined by a server may be determined according to a protocol between the server and an operator, or may be determined by the server based on information such as a quantity of users who receive data and a location of the user. This is not limited in the present invention.

1203: The SCS/AS determines a service data transmission mode based on the network transmission capability.

1204: The SCS/AS sends a first service request message to an SCEF, where the first service request message carries the identification information of the UE, the service requirement information of the UE, and transmission mode notification information.

Optionally, the first service request message further carries identification information of the SCS/AS. For ease of description, the SCS/AS may also be used as a type of service requirement information.

1205: An MME obtains location information of the UE.

Optionally, if there is UE in an idle state in the UE, the UE in the idle state may be switched to a connected state by sending a paging message, so that the MME can obtain the location information of the UE (in the connected state).

1206: The MME sends the location information of the UE to the SCEF.

1207: The SCEF determines one or more BMSCs to which the UE belongs, based on the location information of the UE, and one of the identification information of the UE and the service requirement information of the UE that are in the first service request message, or the time information of receiving service data by the UE.

1208: The SCEF sends a second service request message to the one or more BMSCs.

The first service request message may be used as the second service request message and be sent to the BMSC.

1209: Each of the one or more BMSCs determines the service data transmission mode based on the received service request message and the network transmission capability. Alternatively, the BMSC directly performs an operation based on the transmission mode in the received transmission mode notification information. This is not limited in the present invention.

If the BMSC determines the service data transmission mode to be a multicast mode, an IP address, a port number, and a TMGI are allocated.

1210: Send a service request response message to the SCS/AS by using the SCEF, where the service request response message includes a user-plane IP address and user-plane port number information.

Optionally, the service request response message further includes the TMGI.

1211: The BMSC sends a corresponding TMGI to corresponding UE.

1212: The SCS/AS sends the carried TMGI to the UE.

It should be understood that, only one of a TMGI sending manner in step 1210 and step 1212 and a manner of sending the TMGI to the UE in step 1211 may be selected; or the two manners may be simultaneously performed, and whether TMGIs obtained in the two manners are the same is determined, so as to further determine correctness.

1213: The SCS/AS establishes a user-plane transmission path to the BMSC based on the IP address and a port number.

1214: The SCS/AS sends service data to the BMSC, so that the UE can receive the service data on a path identified by the TMGI.

Therefore, according to the service processing method in this embodiment of this application, the BMSC receives the service request message that carries the identification information and the service requirement information of the terminal device and that is sent by the service capability exposure function SCEF, and determines, based on the service request message, the service data transmission mode to be unicast transmission or multicast transmission, so that the BMSC can determine the transmission mode based on a service request of the server, so as to properly configure a network resource and improve network resource utilization.

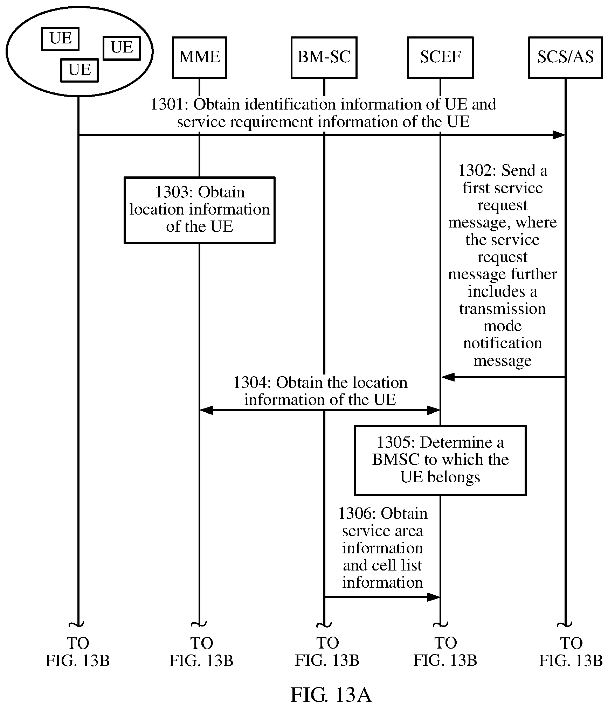

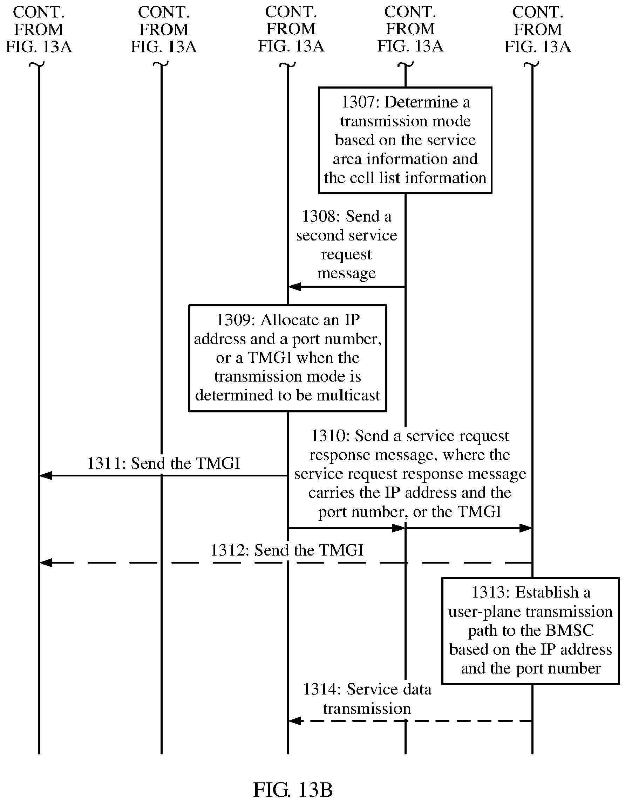

FIG. 13A and FIG. 13B are an interaction flowchart of a service processing method according to an embodiment of this application. Meanings of terms in this embodiment of this application are the same as those in the foregoing embodiments.

It should be noted that this is merely intended to help a person skilled in the art better understand the embodiments of this application, but not to limit the scope of the embodiments of this application.

1301: An SCS/AS obtains identification information of UE and service requirement information of the UE.

Optionally, the SCS/AS may further obtain time information of receiving service data by the UE.

1302: The SCS/AS sends a first service request message to an SCEF, where the first service request message carries the identification information of the UE and the service requirement information of the UE.

Optionally, the first service request message further carries identification information of the SCS/AS. For ease of description, the SCS/AS may also be used as a type of service requirement information.

1303: An MME obtains location information of the UE.

Optionally, if there is UE in an idle state in the UE, the UE in the idle state may be switched to a connected state by sending a paging message, so that the MME can obtain the location information of the UE (in the connected state).

1304: The MME sends the location information of the UE to the SCEF.

1305: The SCEF determines one or more BMSCs to which the UE belongs, based on the location information of the UE, and one of the identification information of the UE and the service requirement information of the UE that are in the first service request message, or the time information of receiving the service data by the UE.

1306: The SCEF obtains service area information and cell list information of the one or more BMSCs.

1307: The SCEF determines the transmission mode based on the service area information and the cell list information of the one or more BMSCs.

1308: The SCEF sends a second service request message to the one or more BMSCs, where the second service request message carries the identification information of the UE, the service requirement information of the UE, and transmission mode notification information.

1309: Each of the one or more BMSCs determines the service data transmission mode based on the received second service request message and a network transmission capability. Alternatively, the BMSC directly performs an operation based on the transmission mode in the received transmission mode notification information. This is not limited in the present invention.

If the BMSC determines the service data transmission mode to be a multicast mode, an IP address, a port number, and a TMGI are allocated.

1310: Send a service request response message to the SCS/AS by using the SCEF, where the service request response message includes a user-plane IP address and user-plane port number information.

Optionally, the service request response message further includes the TMGI.

1311: The BMSC sends a corresponding TMGI to corresponding UE.

1312: The SCS/AS sends the carried TMGI to the UE.

It should be understood that, only one of a TMGI sending manner in step 1310 and step 1312 and a manner of sending the TMGI to the UE in step 1311 may be selected; or the two manners may be simultaneously performed, and whether TMGIs obtained in the two manners are the same is determined, so as to further determine correctness.

1313: The SCS/AS establishes a user-plane transmission path to the BMSC based on the IP address and a port number.

1314: The SCS/AS sends service data to the BMSC, so that the UE can receive the service data on a path identified by the TMGI.

Therefore, according to the service processing method in this embodiment of this application, the BMSC receives the service request message that carries the identification information and the service requirement information of the terminal device and that is sent by the service capability exposure function SCEF, and determines, based on the service request message, the service data transmission mode to be unicast transmission or multicast transmission, so that the BMSC can determine the transmission mode based on a service request of the server, so as to properly configure a network resource and improve network resource utilization.

The foregoing describes in detail the service processing method according to the embodiments of this application, and the following describes a service processing device according to the embodiments of this application.

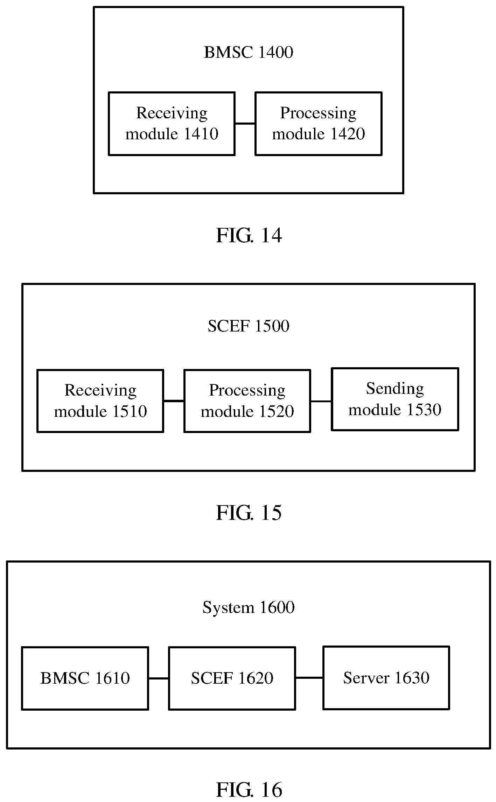

FIG. 14 is a schematic block diagram of a BMSC 1400 according to an embodiment of this application. As shown in FIG. 14, the BMSC 1400 includes:
a receiving module 1410, configured to receive a service request message sent by a service capability exposure function SCEF, where the service request message carries identification information and service requirement information of a terminal device; and
a processing module 1420, configured to determine a service data transmission mode based on the service request message received by the receiving module 1410, where the transmission mode is unicast transmission or multicast transmission.

Optionally, in an embodiment of the present invention, the processing module 1420 is specifically configured to:
determine the transmission mode based on the service requirement information and configuration information on the BMSC.

Optionally, in an embodiment of the present invention, the processing module 1420 is further configured to obtain location information of the terminal device; and
the processing module 1420 is specifically configured to:
determine the transmission mode based on a correspondence between a service area and a cell identity, the identification information of the terminal device, the service requirement information, and the location information of the terminal device.

Optionally, in an embodiment of the present invention, the service request message further carries the location information of the terminal device; and
the receiving module 1410 is further configured to obtain the location information of the terminal device from the service request message.

Optionally, in an embodiment of the present invention, the processing module 1420 is specifically configured to:
determine a quantity of terminal devices based on the identification information of the terminal device; and
determine the transmission mode based on the quantity of terminal devices, the service requirement information, the location information of the terminal device, and the correspondence.

Optionally, in an embodiment of the present invention, the service request message includes transmission mode notification information, and the transmission mode notification information is used to notify the BMSC of the service data transmission mode.

Optionally, in an embodiment of the present invention, the sending module 1410 is further configured to:
send a service request response message to the SCEF, where the service request response message is used to establish a user-plane transmission path, and the service request response message includes an IP address and port number information that correspond to the BMSC.

Optionally, in an embodiment of the present invention, the processing module 1420 is further configured to generate a temporary mobile group identity TMGI, where the TMGI is used to identify a service data transmission path; and
the sending module 1410 is further configured to send the TMGI to the terminal device.

Optionally, in an embodiment of the present invention, the sending module 1410 is specifically configured to:
send the TMGI to the terminal device by using the SCEF and the server.

Optionally, in an embodiment of the present invention, the service data is video data.

Therefore, the BMSC according to this embodiment of this application receives the service request message that carries the identification information and the service requirement information of the terminal device and that is sent by the service capability exposure function SCEF, and determines, based on the service request message, the service data transmission mode to be unicast transmission or multicast transmission, so that the BMSC can determine the transmission mode based on a service request, so as to properly configure a network resource and improve network resource utilization.

FIG. 15 is a schematic block diagram of an SCEF 1500 according to an embodiment of this application. As shown in FIG. 15, the SCEF 1500 includes:
a receiving module 1510, configured to receive a first service request message sent by a server, where the first service request message carries identification information and service requirement information of a terminal device;
a processing module 1520, configured to obtain location information of the terminal device based on the identification information of the terminal device, where
the processing module 1520 is further configured to determine one or more broadcast multimedia service centers BMSCs based on the location information of the terminal device; and
a sending module 1530, configured to send a second service request message to the one or more BMSCs, where the second service request message carries the identification information and the service requirement information of the terminal device.

Optionally, the processing module 1520 is further configured to determine a service data transmission mode, where
the second service request message further carries the transmission mode, and the transmission mode is unicast transmission or multicast transmission.

Optionally, the processing module 1520 is specifically configured to:
determine the transmission mode based on the service requirement information and configuration policy information.

Optionally, the processing module 1520 is specifically configured to:
obtain a correspondence between a service area and a cell identity of the BMSC; and
determine the transmission mode based on the identification information of the terminal device, the service requirement information, the location information of the terminal device, and the correspondence.

Optionally, in an embodiment of the present invention, the processing module 1520 is specifically configured to:
obtain the correspondence configured by the SCEF; or
obtain the correspondence from the BMSC.

Optionally, the processing module 1520 is specifically configured to:
determine a quantity of terminal devices based on the identification information of the terminal device; and
determine the transmission mode based on the quantity of terminal devices, the service requirement information, the location information of the terminal device, and the correspondence.

Optionally, the processing module 1520 is specifically configured to:
send paging indication information to a mobility management entity MME; and
receive the location information of the terminal device that is obtained by the MME by paging the terminal device that is in an idle state.

Optionally, the receiving module 1510 is further configured to receive one or more service request response messages sent by the one or more BMSCs, where the service request response message includes an IP address and port number information that correspond to the one or more BMSCs; and
the sending module 1530 is further configured to send the one or more service request response messages to the server.

Optionally, the receiving module 1510 is further configured to receive a plurality of service request response messages sent by the plurality of BMSCs, where the service request response message is used by the server to establish a user-plane transmission path to the BMSC;
the sending module 1530 is further configured to send a first service request response message in the plurality of service request response messages to the server; and
the sending module 1530 is further configured to send a second service request response message set to a first BMSC corresponding to the first service request response message, where the second service request response message set is all service request response messages different from the first service request response message in the plurality of service request response messages.

Optionally, in an embodiment of the present invention, the receiving module 1510 is further configured to receive a temporary mobile group identity TMGI, where the TMGI is used to identify a service data transmission path; and
the sending module 1530 is further configured to send the TMGI to the terminal device by using the server.

Optionally, in an embodiment of the present invention, the service data is video data.

Therefore, the SCEF according to this embodiment of this application receives the first service request message carrying the identification information and the service requirement information of the terminal device; obtains the location information of the terminal device based on the identification information of the terminal device in the first service request message; determines, based on the location information of the terminal device, the one or more BMSCs to which the terminal device belongs; and sends the second service request message to the one or more BMSCs, so that the BMSC can determine the transmission mode based on a service request of the server, so as to properly configure a network resource and improve network resource utilization.

FIG. 16 is a schematic block diagram of a system 1600 according to an embodiment of this application. As shown in FIG. 16, the system 1600 includes:
a BMSC 1610, an SCEF 1620, and a server 1630 in the foregoing embodiments. The BMSC 1610 herein corresponds to the foregoing 1400, and the SCEF 1620 corresponds to the foregoing 1500.

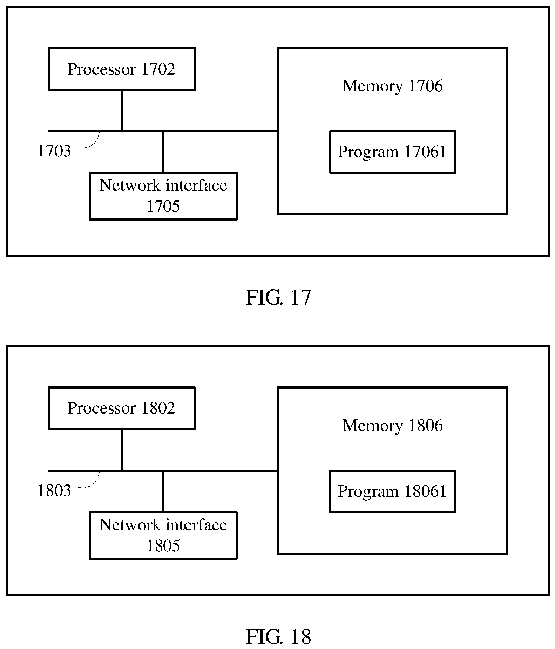

FIG. 17 is a schematic structural block diagram of a BMSC according to an embodiment of the present invention. The BMSC includes at least one processor 1702 (such as a CPU), at least one network interface 1705 or another communications interface, a memory 1706, and at least one communications bus 1703, configured to implement connection and communication between these apparatuses. The processor 1702 is configured to execute an executable module, such as a computer program, stored in the memory 1706. The memory 1706 may include a high-speed random access memory (RAM, Random Access Memory), or may further include a non-volatile memory (non-volatile memory) such as at least one magnetic disk memory. The at least one network interface 1705 (wired or wireless) is used to implement a communicative connection to at least one other network element.

In some implementations, the memory 1706 stores a program 17061, and the processor 1702 executes the program 17061 to perform the following operations:
receiving, by using the network interface 1705, a service request message sent by a service capability exposure function SCEF, where the service request message carries identification information and service requirement information of a terminal device; and
determining a service data transmission mode based on the service request message received by the receiving module, where the transmission mode is unicast transmission or multicast transmission.

It should be noted that the BMSC herein may be specifically the BMSC in the foregoing embodiments, and may be configured to perform the steps and/or procedures corresponding to the BMSC in the foregoing method embodiments.

It can be learned from the technical solutions provided in the embodiments of the present invention that, the BMSC receives the service request message that carries the identification information and the service requirement information of the terminal device and that is sent by the service capability exposure function SCEF, and determines, based on the service request message, the service data transmission mode to be unicast transmission or multicast transmission, so that the BMSC can determine the transmission mode based on a service request, so as to properly configure a network resource and improve network resource utilization.

FIG. 18 is a schematic structural block diagram of an SCEF according to an embodiment of the present invention. The SCEF includes at least one processor 1802 (such as a CPU), at least one network interface 1805 or another communications interface, a memory 1806, and at least one communications bus 1803, configured to implement connection and communication between these apparatuses. The processor 1802 is configured to execute an executable module, such as a computer program, stored in the memory 1806. The memory 1806 may include a high-speed random access memory (RAM, Random Access Memory), or may further include a non-volatile memory (non-volatile memory) such as at least one magnetic disk memory. The at least one network interface 1805 (wired or wireless) is used to implement a communicative connection to at least one other network element.

In some implementations, the memory 1806 stores a program 18061, and the processor 1802 executes the program 18061 to perform the following operations:
receiving, by using the network interface 1805, a first service request message sent by a server, where the first service request message carries identification information and service requirement information of a terminal device;
obtaining location information of the terminal device based on the identification information of the terminal device;
determining one or more broadcast multimedia service centers BMSCs based on the location information of the terminal device; and
sending, by using the network interface 1805, a second service request message to the one or more BMSCs, where the second service request message carries the identification information and the service requirement information of the terminal device.

It should be noted that the SCEF herein may be specifically the SCEF in the foregoing embodiments, and may be configured to perform the steps and/or procedures corresponding to the SCEF in the foregoing method embodiments.

It can be learned from the technical solutions provided in the embodiments of the present invention that, the SCEF receives the first service request message carrying the identification information and the service requirement information of the terminal device; obtains the location information of the terminal device based on the identification information of the terminal device in the first service request message; determines, based on the location information of the terminal device, one or more BMSCs to which the terminal device belongs; and sends the second service request message to the one or more BMSCs, so that the BMSC can determine the transmission mode based on a service request of the server, so as to properly configure a network resource and improve network resource utilization.

An embodiment of this application further provides a computer storage medium, and the computer storage medium may store a program instruction used to indicate any of the foregoing methods.

Optionally, the storage medium may be specifically the memory 1706 and the memory 1806.

It should be understood that specific examples in the present invention are merely intended to help a person skilled in the art better understand the embodiments of the present invention, but not to limit the scope of the embodiments of the present invention.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, with reference to the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for ease and brevity of description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or may be integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected depending on actual requirements, to achieve the objectives of the solutions of the embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes various media that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

Further embodiments of the present invention are provided in the following. It should be noted that the numbering used in the following section does not necessarily need to comply with the numbering used in the previous sections.

Embodiment 1. A service processing method, comprising:
receiving, by a broadcast multimedia service center BMSC, a service request message sent by a service capability exposure function SCEF, wherein the service request message carries identification information and service requirement information of a terminal device; and
determining, by the BMSC, a service data transmission mode based on the service request message, wherein the transmission mode is unicast transmission or multicast transmission.

Embodiment 2. The method according to embodiment 1, wherein the determining, by the BMSC, a service data transmission mode based on the service request message comprises:
determining, by the BMSC, the transmission mode based on the service requirement information and configuration information on the BMSC.

Embodiment 3. The method according to embodiment 1, wherein the method further comprises:
obtaining, by the BMSC, location information of the terminal device; and
the determining, by the BMSC, a service data transmission mode based on the service request message comprises:
determining, by the BMSC, the transmission mode based on a correspondence between a service area and a cell identity, the identification information of the terminal device, the service requirement information, and the location information of the terminal device.

Embodiment 4. The method according to embodiment 3, wherein the service request message further carries the location information of the terminal device; and
the obtaining, by the BMSC, location information of the terminal device comprises:
obtaining, by the BMSC, the location information of the terminal device from the service request message.

Embodiment 5. The method according to embodiment 3 or 4, wherein the determining, by the BMSC, the transmission mode based on a correspondence between a service area and a cell identity, the identification information of the terminal device, the service requirement information, and the location information of the terminal device comprises:
determining, by the BMSC, a quantity of terminal devices based on the identification information of the terminal device; and
determining, by the BMSC, the transmission mode based on the quantity of terminal devices, the service requirement information, the location information of the terminal device, and the correspondence.

Embodiment 6. The method according to embodiment 1, wherein the service request message comprises transmission mode notification information, and the transmission mode notification information is used to notify the BMSC of the service data transmission mode.

Embodiment 7. The method according to any one of embodiments 1 to 6, wherein the method further comprises:
sending, by the BMSC, a service request response message to the SCEF, wherein the service request response message is used to establish a user-plane transmission path, and the service request response message comprises an IP address and port number information that correspond to the BMSC.

Embodiment 8. A service processing method, comprising:
receiving, by a service capability exposure function SCEF, a first service request message sent by a server, wherein the first service request message carries identification information and service requirement information of a terminal device;
obtaining, by the SCEF, location information of the terminal device based on the identification information of the terminal device;
determining, by the SCEF, one or more broadcast multimedia service centers BMSCs based on the location information of the terminal device; and
sending, by the SCEF, a second service request message to the one or more BMSCs, wherein the second service request message carries the identification information and the service requirement information of the terminal device.

Embodiment 9. The method according to embodiment 8, wherein the method further comprises:
determining, by the SCEF, a service data transmission mode, wherein
the second service request message further carries the transmission mode, and the transmission mode is unicast transmission or multicast transmission.

Embodiment 10. The method according to embodiment 9, wherein the determining, by the SCEF, a service data transmission mode comprises:
determining, by the SCEF, the transmission mode based on the service requirement information and configuration policy information.

Embodiment 11. The method according to embodiment 9, wherein the determining, by the SCEF, a service data transmission mode comprises:
obtaining, by the SCEF, a correspondence between a service area and a cell identity of the BMSC; and
determining, by the SCEF, the transmission mode based on the identification information of the terminal device, the service requirement information, the location information of the terminal device, and the correspondence.

Embodiment 12. The method according to embodiment 11, wherein the obtaining, by the SCEF, a correspondence between a service area and a cell identity of the BMSC comprises:
obtaining, by the SCEF, the correspondence configured by the SCEF; or
obtaining, by the SCEF, the correspondence from the BMSC.

Embodiment 13. The method according to embodiment 11 or 12, wherein the determining, by the SCEF, the transmission mode based on the identification information of the terminal device, the service requirement information, the location information of the terminal device, and the correspondence comprises:
determining, by the SCEF, a quantity of terminal devices based on the identification information of the terminal device; and
determining, by the SCEF, the transmission mode based on the quantity of terminal devices, the service requirement information, the location information of the terminal device, and the correspondence.

Embodiment 14. The method according to any one of embodiments 8 to 13, wherein the obtaining, by the SCEF, location information of the terminal device based on the identification information of the terminal device comprises:
sending, by the SCEF, paging indication information to a mobility management entity MME; and
receiving, by the SCEF, the location information of the terminal device that is obtained by the MME by paging the terminal device that is in an idle state.

Embodiment 15. The method according to any one of embodiments 8 to 14, wherein the method further comprises:
receiving, by the SCEF, one or more service request response messages sent by the one or more BMSCs, wherein the service request response message comprises an IP address and port number information that correspond to the one or more BMSCs; and
sending, by the SCEF, the one or more service request response messages to the server.

Embodiment 16. A broadcast multimedia service center BMSC, comprising:
a receiving module, configured to receive a service request message sent by a service capability exposure function SCEF, wherein the service request message carries identification information and service requirement information of a terminal device; and
a processing module, configured to determine a service data transmission mode based on the service request message received by the receiving module, wherein the transmission mode is unicast transmission or multicast transmission.

Embodiment 17. The BMSC according to embodiment 16, wherein the processing module is specifically configured to:
determine the transmission mode based on the service requirement information and configuration information on the BMSC.

Embodiment 18. The BMSC according to embodiment 16, wherein the processing module is further configured to obtain location information of the terminal device; and
the processing module is specifically configured to:
determine the transmission mode based on a correspondence between a service area and a cell identity, the identification information of the terminal device, the service requirement information, and the location information of the terminal device.

Embodiment 19. The BMSC according to embodiment 18, wherein the service request message further carries the location information of the terminal device; and
the receiving module is further configured to obtain the location information of the terminal device from the service request message.

Embodiment 20. The BMSC according to embodiment 18 or 19, wherein the processing module is specifically configured to:
determine a quantity of terminal devices based on the identification information of the terminal device; and
determine the transmission mode based on the quantity of terminal devices, the service requirement information, the location information of the terminal device, and the correspondence.

Embodiment 21. The BMSC according to embodiment 16, wherein the service request message comprises transmission mode notification information, and the transmission mode notification information is used to notify the BMSC of the service data transmission mode.

Embodiment 22. The BMSC according to any one of embodiments 16 to 21, wherein the sending module is further configured to:
send a service request response message to the SCEF, wherein the service request response message is used to establish a user-plane transmission path, and the service request response message comprises an IP address and port number information that correspond to the BMSC.

Embodiment 23. A service capability exposure function SCEF, comprising:
a receiving module, configured to receive a first service request message sent by a server, wherein the first service request message carries identification information and service requirement information of a terminal device;
a processing module, configured to obtain location information of the terminal device based on the identification information of the terminal device, wherein
the processing module is further configured to determine one or more broadcast multimedia service centers BMSCs based on the location information of the terminal device; and
a sending module, configured to send a second service request message to the one or more BMSCs, wherein the second service request message carries the identification information and the service requirement information of the terminal device.

Embodiment 24. The SCEF according to embodiment 23, wherein the processing module is further configured to determine a service data transmission mode, wherein
the second service request message further carries the transmission mode, and the transmission mode is unicast transmission or multicast transmission.

Embodiment 25. The SCEF according to embodiment 24, wherein the processing module is specifically configured to:
determine the transmission mode based on the service requirement information and configuration policy information.

Embodiment 26. The SCEF according to embodiment 24, wherein the processing module is specifically configured to:
obtain a correspondence between a service area and a cell identity of the BMSC; and
determine the transmission mode based on the identification information of the terminal device, the service requirement information, the location information of the terminal device, and the correspondence.

Embodiment 27. The SCEF according to embodiment 26, wherein the processing module is specifically configured to:
obtain the correspondence configured by the SCEF; or
obtain the correspondence from the BMSC.

Embodiment 28. The SCEF according to embodiment 26 or 27, wherein the processing module is specifically configured to:
determine a quantity of terminal devices based on the identification information of the terminal device; and
determine the transmission mode based on the quantity of terminal devices, the service requirement information, the location information of the terminal device, and the correspondence.

Embodiment 29. The SCEF according to any one of embodiments 23 to 28, wherein the processing module is specifically configured to:
send paging indication information to a mobility management entity MME; and
receive the location information of the terminal device that is obtained by the MME by paging the terminal device that is in an idle state.

Embodiment 30. The SCEF according to any one of embodiments 23 to 29, wherein the receiving module is further configured to receive one or more service request response messages sent by the one or more BMSCs, wherein the service request response message comprises an IP address and port number information that correspond to the one or more BMSCs; and
the sending module is further configured to send the one or more service request response messages to the server.

## Claims

1. A service processing method, comprising:
receiving, by a broadcast multimedia service center, a service request message from a service capability exposure function, wherein the service request message carries identification information and service requirement information of a terminal device; and
determining, by the broadcast multimedia service center, a service data transmission mode based on the service request message, wherein the transmission mode is unicast transmission or multicast transmission; and
sending, by the broadcast multimedia service center, a service request response message to the service capability exposure function.

2. The method according to claim 1, wherein the determining, by the broadcast multimedia service center, a service data transmission mode based on the service request message comprises:
determining, by the broadcast multimedia service center, the transmission mode based on the service requirement information and configuration information on the broadcast multimedia service center.

3. The method according to claim 1, wherein the method further comprises:
obtaining, by the broadcast multimedia service center, location information of the terminal device; and
the determining, by the broadcast multimedia service center, a service data transmission mode based on the service request message comprises:
determining, by the broadcast multimedia service center, the transmission mode based on a correspondence between a service area and a cell identity, the identification information of the terminal device, the service requirement information, and the location information of the terminal device.

4. The method according to claim 3, wherein the service request message further carries the location information of the terminal device; and
the obtaining, by the broadcast multimedia service center, location information of the terminal device comprises:
obtaining, by the broadcast multimedia service center, the location information of the terminal device from the service request message.

5. The method according to claim 3 or 4, wherein the determining, by the broadcast multimedia service center, the transmission mode based on a correspondence between a service area and a cell identity, the identification information of the terminal device, the service requirement information, and the location information of the terminal device comprises:
determining, by the broadcast multimedia service center, a quantity of terminal devices based on the identification information of the terminal device; and
determining, by the broadcast multimedia service center, the transmission mode based on the quantity of terminal devices, the service requirement information, the location information of the terminal device, and the correspondence.

6. The method according to claim 1, wherein the service request message comprises transmission mode notification information, and the transmission mode notification information is used to notify the broadcast multimedia service center of the service data transmission mode.

7. The method according to any one of claims 1 to 6, wherein the service request response message is used to establish a user-plane transmission path, and the service request response message comprises an IP address and port number information that correspond to the broadcast multimedia service center.

8. A communication apparatus, configured to perform the method according to any one of claims 1 to 7.

9. A communications system, comprising:
a broadcast multimedia service center configured to perform the method according to any one of claims 1 to 7; and
a service capability exposure function, configured to send the service request message to the broadcast multimedia service center and receive the service request response message from the broadcast multimedia service center.
